Europäisches Patentamt

European Patent Office

Office européen des brevets

(19)

(11)  EP 1 531 041 A1

(12)  EUROPEAN PATENT APPLICATION

(43) Date of publication:
**18.05.2005 Bulletin 2005/20**

(51) Int Cl.7: **B32B 18/00**, C04B 35/10,
C04B 35/185, C04B 35/488

(21) Application number: **03025894.1**

(22) Date of filing: **12.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Universita degli Studi di Trento
38100 Trento (IT)**

(72) Inventors:
 • **Sglavo, Vincenzo Maria
  38100 Trento (IT)**

 • **Bertoldi, Massimo
  38100 Trento (IT)**
 • **Paternoster, Massimo
  38100 Trento (IT)**

(74) Representative: **Freyria Fava, Cristina et al
Buzzi, Notaro & Antonielli d'Oulx Srl,
Via Maria Vittoria 18
10123 Torino (IT)**

(54)   **High reliability ceramic multilayer laminates, manufacturing process and design thereof**

(57)    The present invention concerns ceramic multi-layered laminates, the relative design and manufacturing process, wherein the ceramic multilayered laminates according to the present invention presents a pre-determined mechanical strength characterised by a limited coefficient of variability. By a proper choice of the single layer material and of the stacking order, it is possible to tailor the residual stress profile within the laminate and to obtain "T-curve" fracture behaviour of the laminate.

**Figure 13**

**Description**

**Field of the invention**

The present invention concerns ceramic multilayer laminates with a pre-determined mechanical strength and characterized by a limited strength variability, their production process and design thereof.

**Background of the invention**

Brittle ceramic materials usually present limited mechanical reliability and this is the main reason of their limited use in structural applications.
Although many properties of ceramics suggest their selection for several important employments, such materials show low fracture toughness combined with the presence of flaws generated either during the processing or arising from damages and degradation in service, characteristics which strongly impair their use in industry.
The strength scatter of the standard ceramic materials is usually too large to allow safe design. In addition, for almost all ceramic materials failure occurs in a catastrophic manner in absence of any warning of the incipient rupture [1, 2].
In order to overcome such problems many efforts have been made in the past years. All the solutions proposed to improve the mechanical behaviour of ceramics can be divided in two main classes: i) routes oriented to increase fracture toughness by microstructural control (flaw tolerance or "T-curve" behaviour); ii) routes oriented to reduce the presence or the severity of defects (flaw reduction).
Since plastic deformation mechanisms are strongly inhibited in ceramics, the ways investigated to increase the fracture toughness have been oriented to produce composite microstructures by using the reinforcing effect of a second phase (particles, fibres, whiskers) dispersed in a matrix to promote toughening mechanisms such as crack bridging, bowing or deflection, and the crack-tip and frontal shielding associated to phase-transformation toughening or micro-cracking [1-3].
Unfortunately, all these solutions only partially overcome the problem of the strength scatter in ceramics. In some cases the presence of a sharp interface at the phase boundary is a further source of localised weakness within the composite, being a region more sensitive to alteration and degradation in service. Furthermore, these materials require a precise microstructure which is achievable only with a careful control of the starting materials and process conditions.
The same strict requirements are needed when the reduction of flaw severity is aimed. In some cases the sole solution is the "proof testing" which allows to cut the low-stress tail of critical flaw population [1, 2]. Nevertheless, the resulting costs related to preloading all the articles before use are usually too high for many applications. In addition, the decrease of reliability related to defects development upon service can not be avoided even after proof testing has been carried out.
As an alternative, the fracture behaviour of ceramics has been improved by introducing low-energy paths for the growing crack in laminated structures. This has been achieved using either porous [4] or weak-interlayers [5-8] to promote delamination and crack deflection. The actual strength is not increased, but the maximum deformation and the energy absorbed before failure are increased by many times. Furthermore, noticeable damaging during delamination acts as failure warning. In other cases, sandwiched structures designed to improve the mechanical performance were proposed based on different microstructure-related mechanisms [9, 10].
A different approach has been advanced [11-19] for laminated structures in which the strength is controlled by the presence of compressive residual stresses. Lange and co-workers proposed to create a ceramic laminated structure in which thick layers subjected to limited tensile residual stresses were alternated to thin layers subjected to residual compression [18, 19]. A crack, originating within the layer in residual tension and propagating perpendicularly to the layers plane under the effect of a bending moment acting in the same plane, could be arrested by the two lateral layers in residual compression; therefore, regardless the initial crack size, a minimum strength could be achieved. In spite of the scientific interest of such approach, this approach is characterised by several practical limitations. The most important one is that such laminates can be used only with one specific orientation with respect to the applied load and, for example, they can not be used to produce plates, shells or tubes as usually required in typical industrial applications, where different loading situations can occur. Difficulties arise also in the manufacturing of the laminate since the development of the article occurs perpendicularly to the layers plane and not parallel, as one would expect for layered structures. In addition, a limitation exists in alternating layers in tension and in compression as high strength values can be achieved only by increasing the thickness of the layer in residual compression and this is associated to high tensile stresses in the other layers in which, therefore, cracks are developed.
Therefore, there is still the need for ceramic materials with improved mechanical properties, and, in particular, with a pre-determined fracture strength and a low variability of said strength and free from the limitations of production

**EP 1 531 041 A1**

and use to which are subject the laminated structures produced by Lange.

**Summary of the invention**

The aim of the present invention is to provide improved ceramic materials, which overcome all the disadvantages of the ceramic materials known from the prior art.

Specifically, the main purpose of the present invention is to provide ceramic materials with improved mechanical properties, especially in relation to the failure stress and mainly to its coefficient of variability.

Another object of the present invention is to provide a method to produce and design such improved ceramic materials with a pre-determined mechanical strength and with very limited strength variability.

According to the present invention, the purposes of the present invention are achieved by means of the claims, which follow.

The ceramic materials according to the present invention are multilayer or multilayered ceramic laminates with high failure stress and limited variability of said failure stress.

Moreover the ceramic materials according to the present invention present a stable growth of surface cracks and are quite insensitive to surface flaws, which are partly inhibited from propagating through the ceramic structure.

According to the present invention, the mechanical strength is controlled by the introduction of residual stress profiles originated within the laminate during the manufacturing process, e.g. the phase of co-sintering the different layers or upon cooling down to room temperature the sintered monolithic multilayer.

Such residual stresses can be either due to differences in the thermal expansion coefficient, in the sintering rates or to diffusionless phase transformations with molar volume change of layer materials. By varying the nature and thickness of the single lamina and the stacking order within the multilayer it is possible to estimate the residual stress profile and the resulting fracture toughness curve and to obtain a "T-curve" fracture behaviour.

A properly designed stress profile can produce the desired toughness trend as a function of crack length and influence the crack propagation accordingly. The length of the shortest and the longest defect that propagate in a stable fashion, the threshold stress of stable crack growth and the maximum applied stress before failure (strength) can all be predefined and varied as needed by changing the "structure" of the multilayer and by applying the design procedure according to the present invention.

The advantages of this invention are numerous. It is possible to produce high strength ceramic materials with a limited strength scatter (single-value strength or high Weibull modulus), including a strength value and a stable growth range of cracks both varied and controlled by design. In addition, the material can be designed to support bending loads in a more efficient way than homogeneous materials, since the material is improved only where it needs, i.e. near the surface.

These laminated bodies are therefore natural candidates for structural applications, particularly when high mechanical reliability and damage tolerance in severe conditions are requested, as in the case of load bearing components in automotive and aircraft industry, biomedical prosthesis, chemical plant linings and safety systems.

In the present description a method to design multilayered ceramic laminates with a pre-determined strength and low variability of said strength is described in detail. An iterative approach is advanced to design the multilayer "structure" and to produce the desired "T-curve" behaviour. Two engineered laminates, made by composite layers containing alumina, zirconia and mullite prepared by tape casting, lamination and co-sintering, are presented as examples. The results of the mechanical characterisation prove that the design procedure according to the present invention can be applied successfully to known ceramic materials. The stress profiles are optimised to sustain bending loads and propagate defects in a stable manner up to a maximum depth in the interval 150-200 $\mu$m.

**Detailed description of the invention**

The present invention will now be described in detail with reference to the attached drawings, which are provided purely by way of non-limiting examples and in which:

Figure 1 shows the critical applied $K_I$ related to two different crack length compared to single-value fracture toughness, $K_{IC}$, as a function of crack length.

Figure 2 shows a fracture toughness curve with a possible stable growth interval $[c_A, c_B]$. Straight lines correspond to the applied stress intensity factor associated to stress $\sigma_A$ and $\sigma_B$.

Figure 3 shows the "T-curve" behaviour for microstructural toughening. The strength still depends on initial crack size.

Figure 4 shows the edge crack of length $c$ in a semi-infinite body subjected to a residual stress, $\sigma_{res}$.

Figure 5 shows the step residual stress profile (a) and corresponding apparent fracture toughness (b). The straight line corresponds to the applied stress intensity factor associated to the maximum stress, $\sigma_{tan}$ (tangent stress).

Figure 6 shows the effect of parameters $x_1$ (a) and $\sigma_R$ (b) on the apparent fracture toughness as a function of crack length for a step profile. The asymptote of the curves at $+\infty$ is also shown.

Figure 7 shows the square-wave stress profile (a) and relative apparent fracture toughness (b). Straight lines represent the applied stress intensity factor corresponding to the tangent and threshold stress.

Figure 8 shows the square-wave profile obtained by superposition of two step profiles with equal intensity but opposite sign.

Figure 9 shows the residual stress and corresponding T-curve for Profile 1. Asymptotic trend of single square-wave profile solutions are also shown by dashed lines.

Figure 10 shows the residual stress and corresponding T-curve for Profile 2. Dashed lines also show asymptotic trend of single square-wave profile solutions.

Figure 11 shows (a) a general multi-step T-curve as a function of crack length $c$. Stress intensity factor corresponding to maximum stress, $\sigma_{max}$, and threshold stress, $\sigma_{th}$, are also shown by dashed lines. The steps in the curve are due to differences in the layer fracture toughness; (b) the discontinuous $K_{IC}$ profile.

Figure 12 shows a bi-material asymmetric bi-layer and the symmetric tri-layer of equivalent thickness-to-thickness ratio. Free and constrained deformations of each layer are also shown.

Figure 13 shows the symmetric trilayered structure defined in step 1. Compressive layers of thickness $d^*$ are placed at the surface.

Figure 14 shows the residual stress profile and apparent fracture toughness for the trilayer laminate defined in step 1. The applied stress intensity factor corresponding to the maximum stress, $\sigma_{fail}$, and to the design bending strength, $S_b^*$, are also shown by dashed lines.

Figure 15 shows the laminate structure defined in step 2. Tensile layer of thickness $x_1$ is placed at the surface.

Figure 16 shows the residual stress profile and corresponding T-curve defined in step 2. The applied stress intensity factors corresponding to the threshold stress ($S_{th}^*$), $\sigma_{fail}$ and $S_b^*$ are shown. The intersection point between threshold $K_I$ and T-curve is circled.

Figure 17 shows the laminate structure defined in step 3. Intermediate compressive layers are added before and beyond the most compressed layer. Depth $x_3$ corresponds to $d^*$.

Figure 18 shows the residual stress profile and corresponding T-curve defined in step 3. The applied stress intensity factors corresponding to the maximum stress ($S_b^*$) and $S_{th}^*$ are shown. The intersection point between maximum stress $K_I$ with T-curve is circled.

Figure 19 shows the flow chart of the two-stages slurry preparation used in this work.

Figure 20 shows the AM-1 multilayered structure. The actual layers thickness is listed in the text.

Figure 21 shows the AMZ-1 multilayered structure. The actual layers thickness is listed in the text.

Figure 22 shows the (a) residual stress profile and (b) apparent $K_I$ for AM-1 laminate. Applied stress intensity factor curves for threshold and bending strength conditions are also shown (dashed lines).

Figure 23 shows the (a) residual stress profile and (b) apparent $K_I$ for AMZ-1 laminate. Applied stress intensity factor curves for threshold and bending strength conditions are also shown (dashed lines).

Figure 24 shows the Weibull plot of bending strength data measured on the engineered AM-1 laminate and on the AZ0 homogeneous ceramic material. Corresponding Weibull moduli are also shown.

Figure 25 shows the bending strength data for AM-1 and AZ0 laminates as a function of indentation load. Fitting lines and corresponding slopes are also shown.

Figure 26 shows through thickness arrested cracks produced upon bending on indented AM-1 samples (indentation load = 100 N).

Figure 27 shows the Weibull plot for bending strength data measured on AMZ-1 engineered laminate and on AZ40 homogeneous ceramic material. Corresponding Weibull moduli are also shown.

Figure 28 shows the bending strength data for AMZ-1 and AZ40 laminates as a function of indentation load. Fitting lines and corresponding slopes are also shown.

## THEORETICAL FUNDAMENTALS

The mechanical behaviour of ceramics is usually linear elastic up to failure and the assumptions of LEFM (Linear Elastic Fracture Mechanics) can be considered. In this case, a single constant parameter, the fracture toughness, $K_{IC}$, can describe the material resistance to crack propagation completely, considering for sake of brevity only the mode I (opening mode) of crack loading. The equilibrium condition of a propagating crack satisfies the following relation [2] :

$$K_{I,applied} = Y\sigma(\pi c)^{0.5} = K_{IC} \qquad \text{Eq. (1)}$$

where $K_{I,applied}$ is the applied stress intensity factor, $Y$ a non-dimensional coefficient depending on crack geometry and loading conditions, $\sigma$ the nominal applied stress calculated for the un-cracked body and $c$ the crack length measured in the direction normal to the stress axes. It is important to remember that Eq. (1) has been demonstrated to be the exact solution for a through-thickness sharp crack loaded by a uniform stress applied to an infinite plate in its plane ($Y=1$ for internal crack, $Y=1.12147$ for edge crack). Nevertheless, its validity is completely general in LEFM provided the effects of different crack geometries or loading conditions are taken into account by the geometrical parameter $Y$.

By a simple observation of Eq. (1) it is possible to derive some important considerations. The maximum sustainable stress (i.e. the strength) depends on fracture toughness but also on the crack size. Since a statistical population of defects is actually present in the material, the strength scatter follows *tout court*. The actual strength of a general body is the maximum stress supported by the critical defect, *i.e.* the most severe among the cracks present in its volume.

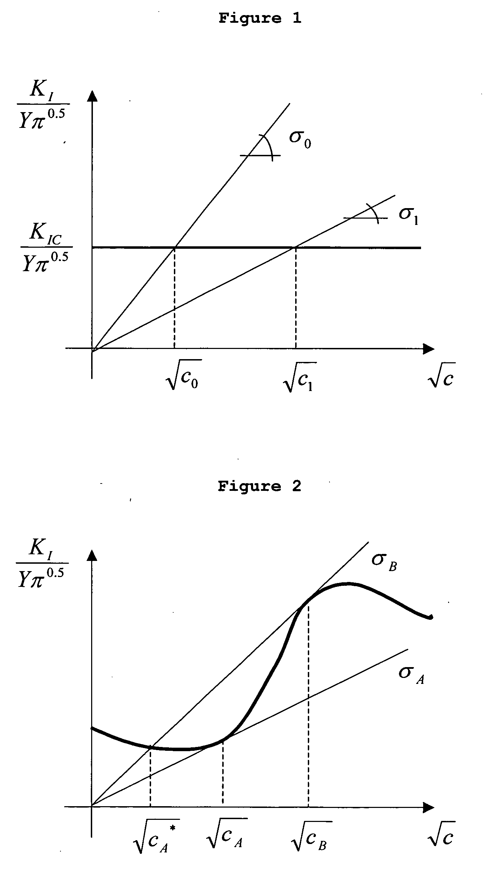

The strength scatter can be visualised by the diagram of Fig. 1. In this graph the abscissa is $c^{0.5}$ in order to simplify the representation of the applied $K_I$ curves that become simply straight lines through the origin with slopes equal to the applied stress. For each crack size the condition represented by Eq. (1) corresponds to the intersection point between the applied $K_I$ and $K_{IC}$. If a finite interval of maximum flaw size $[c_0, c_1]$ is assumed to characterise the material, the corresponding range of strength values $[\sigma_1, \sigma_0]$ can be estimated by Eq. (1). It is worthy of note that, once the range of crack sizes is fixed, the scatter of strength data represented by $(\sigma_0 - \sigma_1)$ increases with fracture toughness exactly in the same manner as single strength values ($Y \sim$ constant). If the relative strength variability is defined as:

$$\frac{\Delta\sigma}{\sigma_0} = \frac{(\sigma_0 - \sigma_1)}{\sigma_0} \qquad \text{Eq. (2)}$$

it is possible to demonstrate that such parameter does not depend on $K_{IC}$, but only on the ratio between the minimum and the maximum crack size. By substituting the stresses calculated by Eq. (1), it is possible in fact to rewrite Eq. (2) as:

$$\frac{\Delta\sigma}{\sigma_0} = 1 - \frac{\sigma_1}{\sigma_0} = 1 - \frac{K_{IC}}{Y(\pi c_1)^{0.5}} \frac{Y(\pi c_0)^{0.5}}{K_{IC}} \qquad \text{Eq. (3)}$$

and finally, after simplification, as:

$$\frac{\Delta\sigma}{\sigma_0} = 1 - \left(\frac{c_0}{c_1}\right)^{0.5} \qquad \text{Eq. (4)}$$

Therefore, for materials presenting single-value toughness, the only way to reduce the strength scatter is to make the crack distribution narrower by limiting the maximum flaw size. For defects originated during material production this can be achieved at least theoretically by proof testing, but can not be applied to damaging developed upon service.

A different approach oriented to reduce the strength variability is based on the possibility to induce a stable growth of the defects. Such kind of crack propagation is verified when both the following conditions are satisfied [2]:

$$\begin{cases} K_{I,applied} = K_{IC} \\ \dfrac{dK_{I,applied}}{dc} \leq \dfrac{dK_{IC}}{dc} \end{cases} \qquad \text{Eq. (5)}$$

From Eq. (5) it is evident that no stable crack growth is possible with a single-value $K_{IC}$ unless the applied $K_I$ is a decreasing function of $c$, as in the case of fixed-grip loading conditions [1, 2]. Considering instead a load increasing from zero to a finite maximum stress level, as typical for common structural applications and material testing, a stable propagation is possible only when the fracture toughness curve is a growing function of $c$, the slope being steeper than that of the applied $K_I$ curve. It has been demonstrated elsewhere that the stability interval, if any, is finite [20]. This is depicted in a general case in Fig. 2 where the interval $[c_A, c_B]$ represents the range of starting crack lengths that can grow in a stable fashion. Since within such interval Eqs (5) are always satisfied, an increasing stress is required to propagate crack and no energy excess is available for crack acceleration [2]. Stable cracks can not increase the kinetic energy and the propagation is slow (quasi-static) and stable. As a direct consequence all the defects included in such interval increase their length up to the same maximum value before final failure. They are therefore equally critical and lead to failure at the same stress level ($\sigma_B$). The practical result is a single-value strength material.

More in detail, further considerations can follow. If a flaw population does exist, some defects shorter than $c_A$ can be present and propagate for $\sigma_A < \sigma < \sigma_B$ (Fig. 2). Due to their finite kinetic energy such cracks can reach a length longer than their stable equilibrium dimension within the stability interval. In some cases such defects can increases their length up to a value greater than $c_B$ and failure can occur also for stress level lower than $\sigma_B$. Their propagation can not be properly considered as stable and the actual variability of the material strength is not exactly equal to zero. Conversely, if the largest defects are shorter than $c_A{}^*$, the failure strength is higher than $\sigma_B$ and scattered.

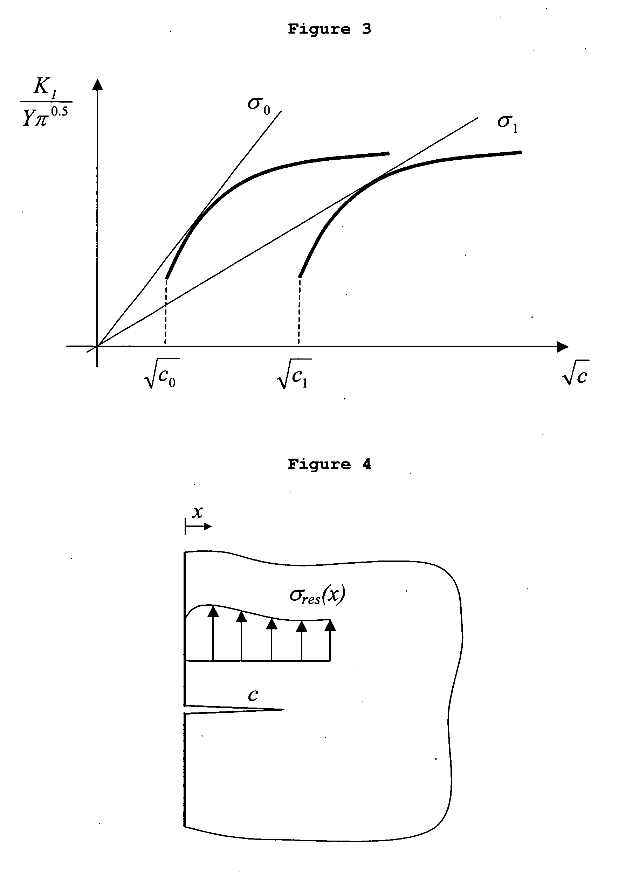

Ceramic materials presenting a raising fracture toughness with respect to crack length are known to posses a "T-curve" behaviour and usually show less severe sensitivity to flaws and a reduced strength scatter [1, 2, 10]. The increase of $K_{IC}$ is usually generated by microstructural phenomena occurring near the crack-tip, which sometimes originate also an increase of the average strength. In these cases the T-curve is more properly a function of crack increase [3], $\Delta c$, as depicted in Fig. 3 and defects with different sizes are associated to different critical stresses. A residual strength scatter can be therefore explained also by this consideration.

Another way to obtain T-curve behaviour is based on the presence of residual stresses. The stress intensity factor, $K_{I,\sigma}$, due to a non-uniform stress distribution $\sigma(x)$ acting on a through-thickness sharp crack of length $c$ in a infinite plate [1] can be estimated as:

$$K_{I,\sigma} = \frac{2}{(\pi c)^{0.5}} \int_0^c \sigma(x) \frac{Y(x/c)}{(c^2 - x^2)^{0.5}} dx \qquad \text{Eq. (6)}$$

Alternatively, by using the more general weight function approach [1, 25, 26] one can write:

$$K_{I,\sigma} = \int_0^c \sigma(x) h(\frac{x}{c}, \frac{c}{w}) dx \qquad \text{Eq. (7)}$$

where $h$ is a weight function (tabulated in literature for many important cases), $w$ the finite body width and the other symbols have the standard meaning. If the residual stresses are separate from external loading, the corresponding term can be included [1] in the material fracture resistance to obtain the so-called apparent fracture toughness, $K_{I,app}$:

$$K_{I,app} = K_{IC} - K_{I,res} = K_{IC} - \int_0^c \sigma_{res}(x) h(\frac{x}{c}, \frac{c}{w}) dx$$

$$\text{Eq. (8)}$$

In the case of compressive residual stresses (negative) the second term is positive and the apparent fracture toughness increases with respect to $K_{IC}$. Given a proper residual stress profile, it is possible to obtain a $K_{I,app}$ which is a steep growing function of $c$. In addition, if surface cracks are considered, the $K_{I,app}$ curve is unique for all defects and therefore can be considered as fixed with respect to the surface position. This remark is important since the scatter related to the presence of a starting flaw population within the stable growth range is not present in this case.

It is not easy to discuss Eq. (8) in the case of a general stress profile. In order to understand the effect of some parameters on the apparent fracture toughness trend it is useful to analyse some special situations. If an edge crack in a semi-infinite body with a residual stress distribution $\sigma_{res}(x)$ is considered (Fig. 4), Eq. (6) can be rewritten as follows:

$$K_{I,res} = \frac{Y}{(\pi c)^{0.5}} \int_0^c \sigma_{res}(x) \frac{2c}{(c^2 - x^2)^{0.5}} dx \qquad \text{Eq. (9)}$$

being $Y = 1.12147$. This is not rigorously true for non-uniform loading, since $Y$ maintains a slight dependence on $x/c$. Nevertheless, such approximation allows to simplify the following calculation without loosing of generality. In this discussion discontinuous stepwise stress profiles will be taken into account according to the multilayered laminate structures of relevance here.

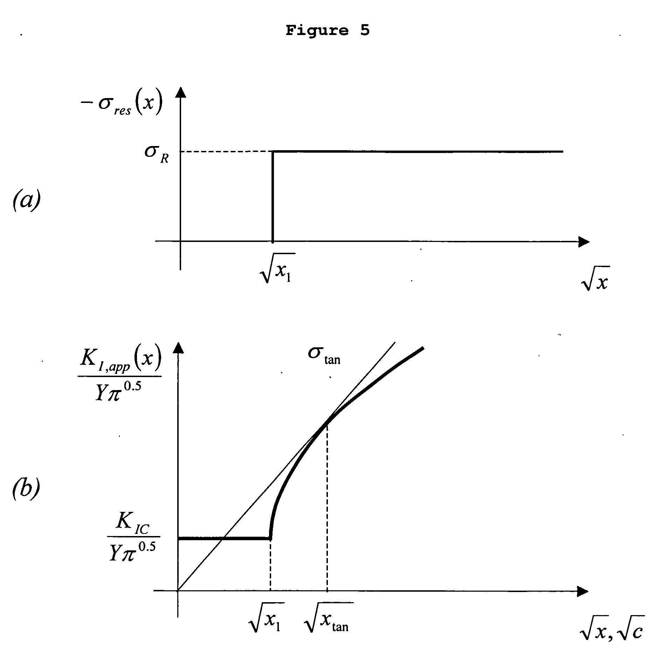

The simplest case, which can be discussed, is the step profile depicted in Fig. 5(a). The stress is defined by the following relation:

$$\begin{cases} 0 & 0 < x < x_1 \\ -\sigma_R & x_1 < x < +\infty \end{cases} \qquad \text{Eq. (10)}$$

The apparent $K_I$ is easily calculated by using Eqs (9) and (10) as:

$$\begin{cases} K_{I,app} = K_{IC} & 0 < x < x_1 \\ K_{I,app} = K_{IC} + 2Y\left(\frac{c}{\pi}\right)^{0.5} \sigma_R\left(\frac{\pi}{2} - \arcsin\left(\frac{x_0}{c}\right)\right) & x_1 < x < +\infty \end{cases}$$

$$\text{Eq. (11)}$$

The trend of $K_{I,app}$ is plotted in Fig. 5(b) as a function of the square root of $c$. One can point out that $K_{I,app}$ can be similarly expressed as a function of $c$ or $x$ since both the abscissa and the crack length correspond to the distance from the external surface. The analysis of Eq. (11) in the plane $(K_I, c^{0.5})$ demonstrates that the slope is infinite in $x_1$ and there is an oblique asymptote at $+\infty$ [20]. A stable growth interval exists therefore between $x_1$ and the position of the tangent point, $x_{tan}$, (Fig. 5(b)); the tangent strength, $\sigma_{tan}$, corresponds to the maximum stress, accordingly.

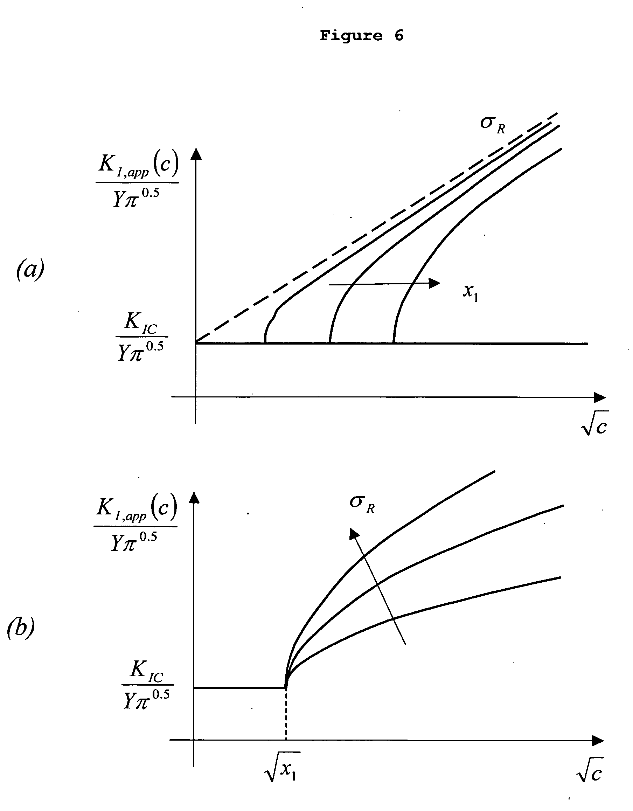

The influence of parameters $x_1$ and $\sigma_R$ are considered in Fig. 6. If $x_1$ increases, the major effect is a reduction of the tangent stress and an increase of the stability interval (Fig. 6(a)). Since a high strength and a large stable growth range are similarly desired, an intermediate value of $x_1$ has to be considered. Conversely, the effect of a raising $\sigma_R$ is useful to increase both the stable growth range and the maximum stress (Fig. 6(b)). In the special case of $x_1 = 0$, Eq. (11) can be simplified as follows:

$$K_{I,app} = K_{IC} + Y\sigma_R\pi^{0.5}c^{0.5} \qquad 0<c<+\infty \qquad \text{Eq. (12)}$$

and the same linear trend of the asymptote is obtained. As for the effect of $K_{IC}$, one can observe that if $K_{IC}$ increases, the maximum stress is higher but the stability interval decreases. Nevertheless, as discussed later, $K_{IC}$ is a parameter that depends on the material selection and it is usually considered as constant in the calculation.

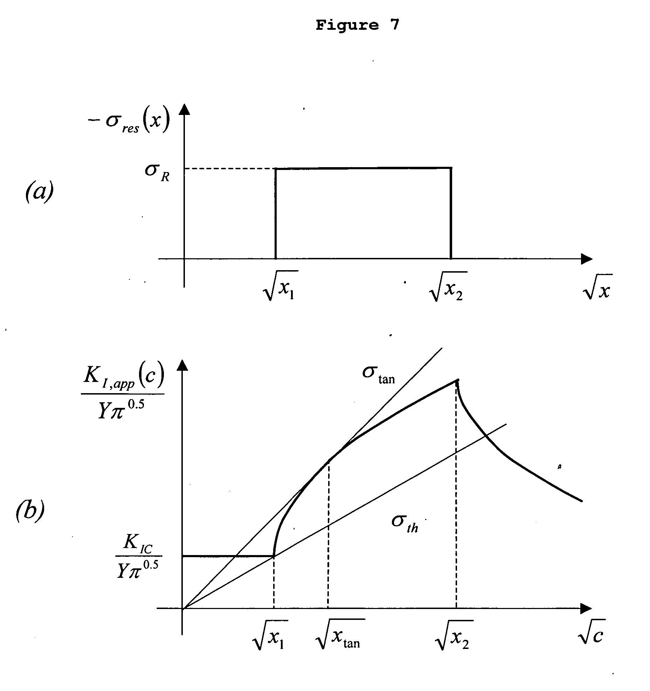

The natural development of the step profile is the square-wave profile (Fig. 7(a)). The analytical expression of such profile is:

$$\begin{cases} 0 & 0 < x < x_1 \\ -\sigma_R & x_1 < x < x_2 \\ 0 & x_2 < x < +\infty \end{cases} \qquad \text{Eq. (13)}$$

and the corresponding $K_{I,app}$ is:

$$\begin{cases} K_{I,app} = K_{IC} & 0 < x < x_1 \\ K_{I,app} = K_{IC} + 2Y\left(\dfrac{c}{\pi}\right)^{0.5}\sigma_R\left[\dfrac{\pi}{2} - \arcsin\left(\dfrac{x_1}{c}\right)\right] & x_1 < x < x_2 \\ K_{I,app} = K_{IC} + 2Y\left(\dfrac{c}{\pi}\right)^{0.5}\sigma_R\left[\arcsin\left(\dfrac{x_2}{c}\right) - \arcsin\left(\dfrac{x_1}{c}\right)\right] & x_2 < x < +\infty \end{cases}$$

$$\text{Eq. (14)}$$

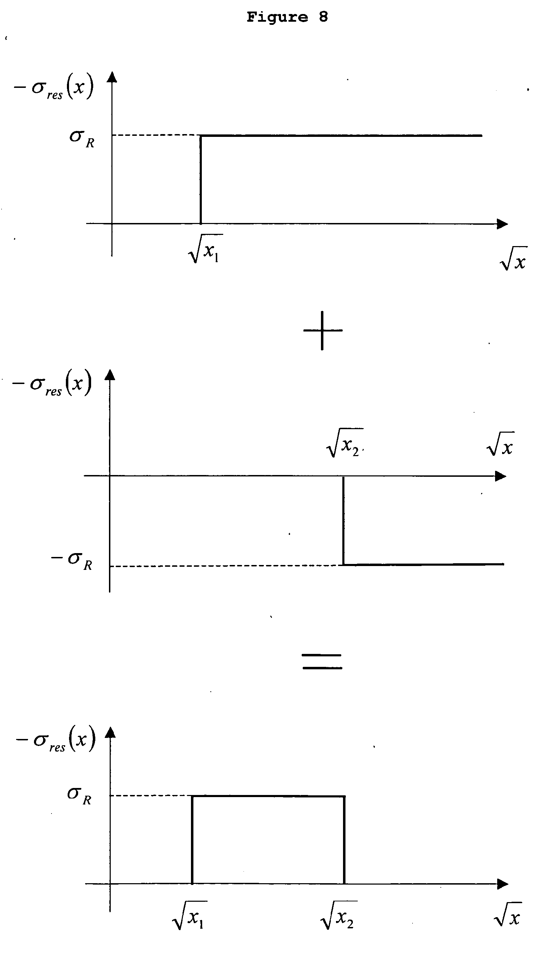

The same result can be obtained by using the superposition effect approach. The square-wave profile can be considered as the sum of two simple step profiles with stresses of identical amplitude but opposite sign placed at different depths, as shown in Fig. 8. By using the superposition effect principle valid for stress intensity factor [1, 26], it is possible to obtain Eq. (14) by the simple algebraic sum of the two single step profile solutions.

This special case is useful to discuss an important aspect. Depending on the extent of the compressed layer, it is possible that the tangent point lies beyond the position $x_2$ ($x_{tan} > x_2$). In this case the stable growth range is automatically defined by the interval $[x_1, x_2]$ and the maximum stress is lower than the tangent stress. Strength and instability point become mutually independent within a certain degree.

The threshold stress, corresponding to the beginning of the stable growth range, is automatically defined by $K_{IC}$ and $x_1$, but does not depend on stress amplitude. As it is clearly evident in Fig. 6, threshold stress can be simply calculated by:

$$\sigma_{th} = \frac{K_{IC}}{Y\pi\sqrt{x_1}} \qquad \text{Eq. (15)}$$

It has been shown here that a single compressed layer of proper thickness placed at a certain depth from the surface produces a stable growth range which matches its extension, provided the compressive stress is high enough to move the tangent point beyond the position $x_2$. Otherwise, the maximum stress corresponds to the tangent stress. Unfortunately, this simple solution is not actually practical for several reasons. First of all, the force equilibrium of such laminate is not satisfied. The presence of a compressive stress requires in fact tensile stresses in the counteracting material. In the case of a simple self-equilibrated bi-material symmetric laminate the stress and thickness of the two layers are related according to the following equations:

$$\sigma_1 t_1 + \sigma_2 t_2 = 0 \qquad \text{Eq. (16-a)}$$

$$t_1 + t_2 = t \qquad \text{Eq. (16-b)}$$

where $\sigma_1$ and $\sigma_2$ are the residual stresses in the two layers and $t_1$ and $t_2$ are the corresponding layer thickness, respectively. It is evident that the amplitude of the compressive stress is related to the corresponding layer thickness and can not be varied independently as needed, unless the amplitude of the tensile stress in the counteract layer is increased. In addition, in order to obtain high strength values, the required compressive stress is usually very high and intense localised interlaminar shear stresses can be present which sometimes originate delamination.

Edge cracking can be also present at the boundaries of highly compressed layer. This phenomenon was proved elsewhere [27] to occur when the layer thickness is larger than a critical value, $t_c$, estimated by the following equation:

$$t_c = \frac{K_{IC}^2}{0.34(1+\nu)\sigma^2} \qquad \text{Eq. (17)}$$

where $\nu$ is the Poisson's ratio and all other symbols have the common meaning. Layer thickness $t$ and compressive stress $\sigma$ are therefore mutually dependent also for this reason and it is not possible to design the desired mechanical behaviour by using a square-wave stress (single layer) profile. Conversely, almost all these problems can be overcome by considering a multilayered structure.

In order to understand the effect of a more complex profile on the T-curve trend, it is useful to analyse another simple case. Equations (18) and (19) define two profiles obtained both by the combination of two simple square-wave profiles of different amplitude and identical extension. This example corresponds to laminates with two layers of different composition and the same thickness, $\Delta x$. For simplicity it is assumed here that the stress amplitude in one layer is double than the other one. The actual order of the two layers is the only difference between the two examined profiles.

$$\text{Profile 1} \qquad \begin{cases} 0 & 0 < x < x_1 \\ -\sigma_R & x_1 < x < x_1 + \Delta x \\ -2\sigma_R & x_1 + \Delta x < x < x_1 + 2\Delta x \\ 0 & x_1 + 2\Delta x < x < +\infty \end{cases} \qquad \text{Eq. (18)}$$

$$\text{Profile 2} \qquad \begin{cases} 0 & 0 < x < x_1 \\ -2\sigma_R & x_1 < x < x_1 + \Delta x \\ -\sigma_R & x_1 + \Delta x < x < x_1 + 2\Delta x \\ 0 & x_1 + 2\Delta x < x < +\infty \end{cases} \qquad \text{Eq. (19)}$$

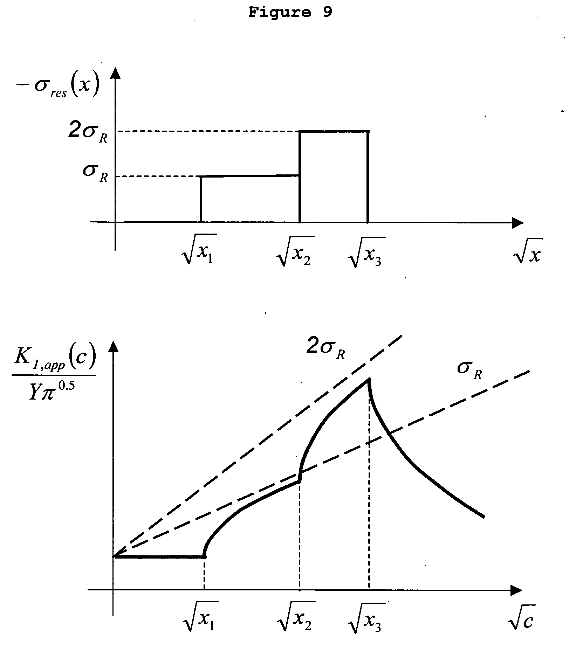

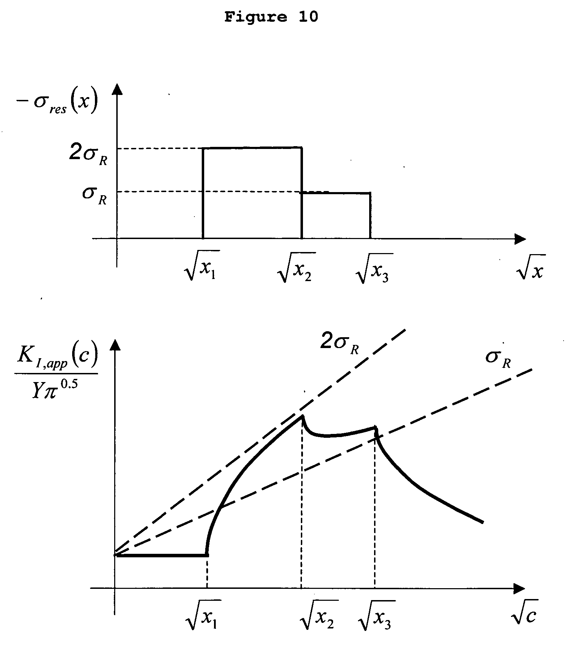

Figures 9 and 10 show the two stress profiles and the corresponding T-curve estimated by superposition. Dashed lines represent the asymptotic trend of single square-wave solutions. It is useful to remember that both layers have the same thickness, $\Delta x$, even if this is hidden in the graphs because of the square root abscissa.

It is evident that Profile 1 shows a monotonic increase of apparent $K_I$ within the compressive region [$x_1$, $x_1$ + $2\Delta x$], whereas Profile 2 shows a trend not well matched with a stable growth of defects since there is a negative slope region of T-curve. The order of the compressive layers is therefore important. The above consideration is general and the amplitude of compression in successive layers must be continuously growing to obtain a properly designed T-curve.

The superposition effect principle presented in the previous examples can be used to calculate the T-curve for a general multi-step profile. Such approach can be extended in fact to $n$ layers provided that $n$ step profiles with amplitude $\Delta\sigma_j$ equal to the stress increase of layer j with respect to the previous one are considered. The following general equation, which defines the apparent $K_I$ for layer $i$ in the interval [$x_{i-1}$, $x_i$], is obtained:

$$K_{I,app}{}^{i} = K_{IC} - \sum_{j=1}^{i} \left[ 2Y\left(\frac{c}{\pi}\right)^{0.5} \Delta\sigma_j \left[\frac{\pi}{2} - \arcsin\left(\frac{x_{j-1}}{c}\right)\right]\right] \qquad x_{i-1} < x < x_i$$

$$\text{Eq. (20)}$$

where the exponent $i$ indicates the layer rank and $x_j$ is the starting depth of layer $j$. It is worthy of note that such definition represents a short notation of $n$ different equations since the sum is calculated for a different number of terms for each $i$. Regardless the layers order, since 2n parameters ($x_i$, $\Delta\sigma_i$) are now available and two conditions have to be satisfied (force equilibrium and equivalence between the sum of single layer thickness and the total laminate thickness), 2n-2 are the remaining degrees of freedom to produce the desired T-curve. This is rigorously true if the stresses itself are not dependent one each other, although the practical ways to develop residual stresses require some further conditions to be satisfied. Nevertheless, provided the number of layers is properly increased, the required T-curve can be obtained.

Equation (20) suggests some considerations about the conditions required from a proper stress profiles to promote stable growth. The stable propagation of surface defects is possible only when the T-curve is a monotonic increasing function of $c$ and this requires a continuous increase of compressive stresses from the surface to internal layers. A stress-free or slightly tensile stressed layer is also preferred on the surface since this choice allows to decrease the threshold stress for stable growth and sets the position of the smallest defect that grows in a stable fashion. In this way the starting conditions (stress and depth) of the stability range are easily controlled. It is important to point out that according to Eq. (20) the effect of the surface layer is transferred to all the internal layers. The surface tensile layer has in fact a reducing effect on the T-curve for any crack length and for this reason its depth and tensile stress intensity must be limited. Otherwise the maximum stress will result too low. In addition, by multi-step profiles it is possible to decrease the thickness of the most stressed layer by introducing intermediate stressed layers before and beyond it. The risk of edge cracking and delamination phenomena are reduced accordingly.

The above considerations are true for edge cracks, like surface flaws or sub-surface cracks produced by impact and rolling damages, either in tensile and bending loading. Alternatively, also internal cracks can propagate under tensile loading. In this case the origin of the cracks can not be fixed precisely within the laminate and the only cautious way is to define a T-curve considering a symmetric profile repeated several times in the laminate structure. The starting crack length can be considered equal to the sum of all the tensile layers thickness and the T-curve designed accordingly. It is important to claim that the degrees of freedom of such symmetric and periodic profiles are obviously reduced, since the layers occurring in the decreasing part of T-curve can not be chosen to define stresses accurately. In addition, high strength values can hardly be obtained unless using other toughening mechanisms to increase $K_{IC}$ as discussed above, as part of the laminate, which is in tension, has to be limited to avoid large starting cracks. For the same reason, stress amplitude in the tensile layer has to be limited. Nevertheless, the advantages illustrated above for multi-step profiles with respect to simply alternate layers are still confirmed.

The presented model is very simple and based on some important assumptions among which the material homogeneity is definitely wrong. One of the main corrections should regard the inhomogeneity and the first possible improvement regards the use of different fracture toughness $K_{IC}$ for each layer. The modification of the model is trivial and Eq. (18) is simply rewritten as:

$$K_{I,app}{}^{i} = K_{IC}{}^{i} - \sum_{j=1}^{i} \left[ 2Y\left(\frac{c}{\pi}\right)^{0.5} \Delta\sigma_j \left[\frac{\pi}{2} - \arcsin\left(\frac{x_{j-1}}{c}\right)\right]\right] \qquad x_{i-1} < x < x_i$$

$$\text{Eq. (21)}$$

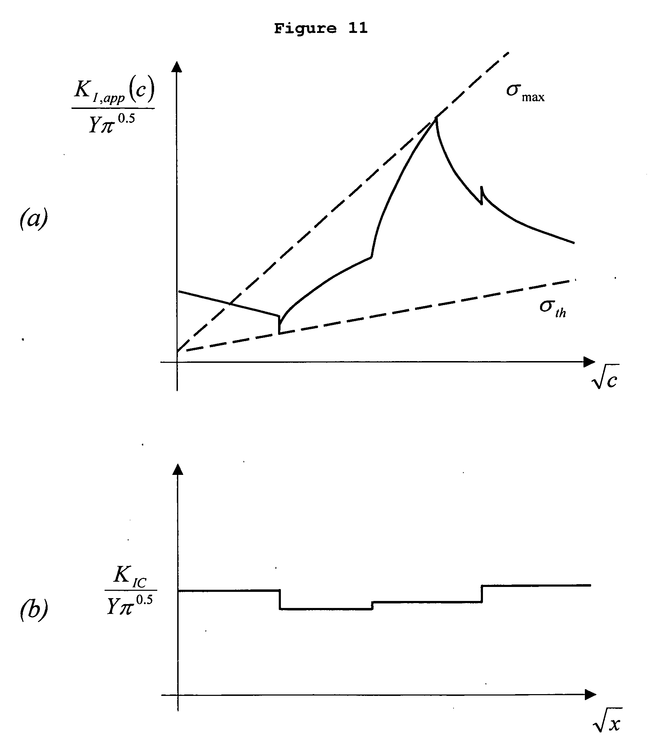

where the proper $K_{IC}{}^{i}$ is considered for each layer $i$. As depicted in Fig. 11 the effect of this model correction is to induce some discontinuity in the T-curve corresponding to the steps in the $K_{IC}$ profile. The condition of a monotonic growing T-curve is no longer satisfied simply by a raising the stress profile. Also $K_{IC}$ has to increase or remain constant with $c$ to maintain the stability condition, at least up to the maximum point of stable growth range. As deeply discussed in the following paragraph, this is not always possible since the choice of layer material is usually related to the development of the proper residual stresses. Nevertheless, other toughening mechanisms in addition to residual stresses can be used to obtain a $K_{IC}$ growing with $c$ if needed.

Another improvement of the model can be obtained by considering the finite geometry of the actual body by using a weight function approach. The assumption of an infinite body is in fact not realistic. In addition, in this manner the wrong assumption of a constant $Y$ can also be corrected. The exact solution for T-curve can be calculated by using the same approach based on the effect superposition principle discussed above simply by considering Eq. (7) in place of Eq. (9). Briefly, if superposition is applied to n step profiles and Eq. (7) is used for the calculation of the applied $K_I$, one can write:

$$K_{I,app}{}^i = K_{IC}{}^i - \sum_{j=1}^{i}\left[\int_{x_j}^{c}\Delta\sigma_j h(\alpha,\beta)dx\right] \qquad x_{i-1} < x < x_i$$

$$\text{Eq. (22)}$$

where $\alpha = c/w$ and $\beta = x/c$. Since $\Delta\sigma_j$ is constant with x within the interval $[x_{j-1}, x_j]$, Eq. (22) can be rewritten as:

$$K_{I,app}{}^i = K_{IC}{}^i - \sum_{j=1}^{i}\left[\Delta\sigma_j \int_{x_j}^{c}h(\alpha,\beta)dx\right] \qquad x_{i-1} < x < x_i$$

$$\text{Eq. (23)}$$

If the variable change $x = c/\beta$ is considered, Eq. (23) becomes:

$$K_{I,app}{}^i = K_{IC}{}^i - \sum_{j=1}^{i}\left[\Delta\sigma_j c\left[\int_{\beta_j}^{1}h(\alpha,\beta)d\beta\right]\right] \qquad x_{i-1} < x < x_i$$

$$\text{Eq. (24)}$$

or, similarly:

$$K_{I,app}{}^i = K_{IC}{}^i - \sum_{j=1}^{i}\left[\Delta\sigma_j c\left[\int_{0}^{1}h(\alpha,\beta)d\beta - \int_{0}^{\beta_j}h(\alpha,\beta)d\beta\right]\right] \quad x_{i-1} < x < x_i \quad \text{Eq.}$$

$$\text{(25)}$$

which can be simplified as :

$$K_{I,app}{}^i = K_{IC}{}^i - c\sum_{j=1}^{i}\left[\Delta\sigma_j\left(S_0{}^1 - S_0{}^{\beta_j}\right)\right] \qquad x_{i-1} < x < x_i$$

$$\text{Eq. (26)}$$

where

$$S_0^{\;1} = \int_0^1 h(\alpha,\beta)\,d\beta \qquad\qquad \text{Eq. (26-a)}$$

$$S_0^{\;\beta_j} = \int_0^{\beta_j} h(\alpha,\beta)\,d\beta \qquad\qquad \text{Eq. (26-b)}$$

are integrals that can be evaluated numerically. The weight functions $h$ are available for many important geometries and loading conditions. In the case of a multilayer laminate of thickness $w$ with biaxial residual stresses in the lamina plane and an edge crack $c$ propagating in a direction normal to the stress, the weight function is [26]:

$$h = \left(\frac{2}{\pi c}\right)^{0.5} \frac{1}{(1-\beta)^{0.5}} \left[1 + \sum_{\nu,\mu} \frac{A_{\nu\mu}\alpha^{\mu}}{(1-\alpha)^{1.5}}(1-\beta)^{\nu+1}\right] \qquad \text{Eq. (27)}$$

and $\nu$, $\mu$ and $A_{\mu\nu}$ are tabulated in Ref. [26].

It is important to recognise that some approximations are still present in the refined model. Material inhomogeneity regards in fact all layer properties (not only fracture toughness) and the spatial variation of elastic properties should be also taken into account. Nevertheless, the error due to this approximation has been estimated elsewhere [28-30] as being less than 10% if the Young modulus variation is less than 33%.

**CERAMIC LAMINATE DESIGN**

Laminate structure is related either to the nature and thickness of the single lamina and to the stacking order of the laminae within the multilayer. According to the theory of composite plies [31], in order to maintain flatness during in-plane loading, as in the case of biaxial residual stresses developed during production, laminate structure has to satisfy some symmetry conditions. If each layer is isotropic, like ceramic laminates with fine and randomly oriented microstructure, the sole condition to be verified is that stacking order of laminae respects the planar symmetry of the whole multilayer. In this case the laminate is orthotropic and its response to loading is similar to that of a homogeneous plate, i.e. no warping during in-plane loading is produced [31].

In the previous theoretical analysis no remarks have been presented about the nature of the residual stresses. Regardless the physical source of such stresses, their presence in co-sintering multilayers is related to constraining effect. If perfect adhesion between laminae can be assumed, each lamina must deform similarly and at the same rate of the others (*constrain*). The difference between the free deformation and the free deformation rate of the single lamina with respect to the average value of the whole laminate gives actually origin to stresses. These stresses can be either viscous or elastic in nature and can be relaxed or maintained within the material depending on the temperature range, cooling speed and material properties. Provided a position far enough from the edges is analysed and the thickness is much smaller than the other dimensions, each lamina can be considered to be in a biaxial stress state.

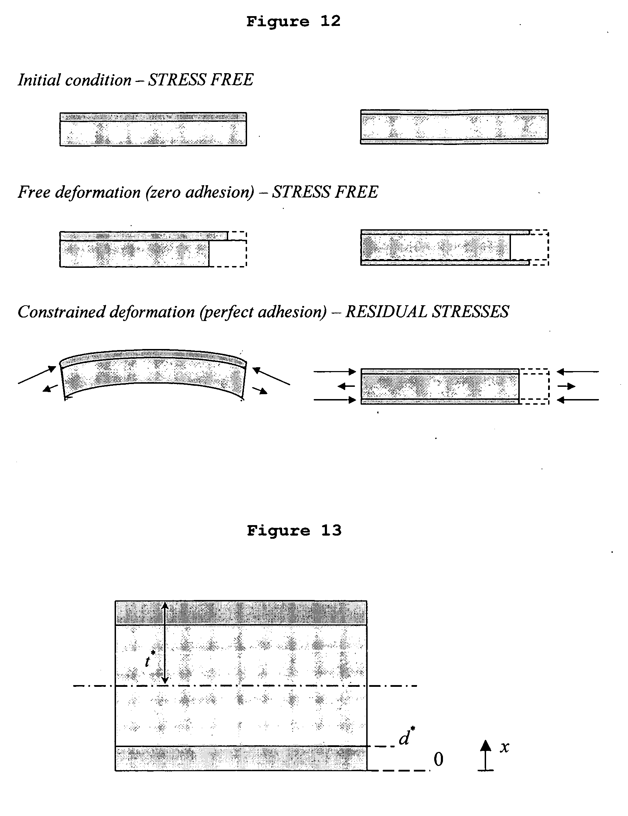

In order to visualise the constraining effect it can be useful to analyse what happens in the case of a simple bimaterial trilayer. The choice of a trilayer is related only to the necessity to satisfy the symmetry condition discussed above. Figure 12 shows a comparison between an asymmetric bilayer and the corresponding symmetric trilayer with the same layer thickness-to-thickness ratio. Constrains produce residual stresses in both cases, but warping is also present in the asymmetric laminate. Free and constrained deformation of single layer is also shown. The self-equilibrium of the trilayer is expressed by:

$$\sigma_1 t_1 + \sigma_2 t_2 = 0 \qquad\qquad \text{Eq. (28-a)}$$

while the congruence of constrained deformation is expressed by:

$$\varepsilon_1 = \varepsilon_2 = \varepsilon \qquad \text{Eq. (28-b)}$$

$$\dot{\varepsilon}_1 = \dot{\varepsilon}_2 = \dot{\varepsilon} \qquad \text{Eq. (28-c)}$$

where $\varepsilon$ is the deformation of the laminate and $\dot{\varepsilon}$ represents the deformation rate. The actual deformation $\varepsilon$ of each layer can be considered as the algebraic sum of the free deformation $\varepsilon_{free}$ of the single layer when not "constrained" in the laminate and the elastic strain e developed within the laminate to maintain the congruence (Eq. (28-b)):

$$\varepsilon_1 = e_1 + \varepsilon_{1,free} \qquad \text{Eq. (28-d)}$$

The thickness of the layers has also to satisfy the following equation:

$$t_1 + t_2 = t \qquad \text{Eq. (29)}$$

where t is the thickness of the whole laminate. If the mechanical behaviour is assumed as linear elastic, the following equations represent the constitutive bond, *i.e.* the relation between elastic strain and stress for each layer:

$$\begin{cases} \sigma_1 = E_1^* e_1 \\ \sigma_2 = E_2^* e_2 \end{cases} \qquad \text{Eq. (30)}$$

where $E^*$ is equal to Young modulus, $E,$ in uniaxial stress state and $E / (1-v)$ in the case of biaxial stress state. In addition, Eq. (28-c) does not apply because viscous stresses are not present. Under these assumptions the stress in layer 1 can be easily calculated by solving the linear system expressed by Eq. (28) and Eq.(30) as:

$$\sigma_1 = \frac{E_1^* \Delta \varepsilon_{free}}{\dfrac{t_1 E_1^*}{t_2 E_2^*} + 1} \qquad \text{Eq. (31)}$$

where $\Delta \varepsilon_{free}$ represents the difference between the free deformation of layer 2 and layer 1. A compressive stress is therefore developed in the layer with the highest free elongation, *vice versa* if the free deformation is a contraction.
Since the increase of the compressive stress is usually one of the main purposes to obtain "T-curve" behaviour, it is interesting to investigate the influence of parameters in Eq. (31). At first, the residual stress in a layer is a direct function of the Young modulus and in order to obtain high compressive stresses stiff materials are required. This is requested also for the tensile layer, since the ratio between the Young modules has also an influence on stress amplitude. Another consideration regards the layer thickness. The stress can be controlled in fact by adjusting the thickness-to-thickness ratio $t_1/t_2$, though Eq. (31) admits a maximum value, for $t_1$ approaching zero:

$$\lim_{t_1/t_2 \to 0} \sigma_1 = E_1^* \Delta \varepsilon_{free} \qquad \text{Eq. (32)}$$

that can not be overcome in any case. The difference between the free deformations of the single layers is the actual driving force for the development of residual stresses. The nature of such difference can be associated to diffusionless phase transformation phenomena with molar volume change or to the thermal expansion mismatch between layer materials. In the special case where the stresses can be related only to thermal contraction from high temperature ($T_{sf}$) to room temperature (*RT*), the difference between the free deformations can be calculated as:

$$\Delta\varepsilon_{free} = \int_{T_{sf}}^{RT} \Delta\alpha(T)dT \qquad \text{Eq. (33-a)}$$

where $\Delta\alpha(T)$ is the difference between the thermal expansion coefficients as a function of temperature. In an analogous manner, the same difference can be estimated by:

$$\Delta\varepsilon_{free} = \Delta\alpha\Delta T \qquad \text{Eq. (33-b)}$$

where $\Delta T$ is the temperature change and $\Delta\alpha$ the difference between the average coefficient of thermal expansion in the considered temperature range. It is useful to remember now that ceramic laminates are always co-fired by a thermal treatment that requires a heating ramp, a high temperature isothermal and a cooling phase. Layer materials present different physical and mechanical behaviours (elastic, viscous-elastic or purely viscous) as a function of temperature and therefore the assumption of a simple linear elastic model seems hardly to be acceptable. Nevertheless, the viscous and viscous-elastic stresses have been proven to be transient in nature and to develop mainly during the first stage of heating and upon initial cooling [32, 33]. In addition, they are usually a fraction of the sintering stress, *i.e.* not larger than a few megapascals [32-35]. The main contribute to residual stresses is therefore related to the effect of thermal expansion mismatch and phase transformation. The temperature range can be properly defined by evaluating the so-called stress-free temperature, $T_{sf}$, which represents the maximum temperature below which the relaxation phenomena are substantially absent and residual stresses are developed.

Provided the symmetry condition described above is satisfied, the biaxial residual stresses in a generic multilayers formed by *n* layers can be estimated. Under the assumption that phase transformation phenomena are not occurring, the conditions of the laminate self-equilibrium, the congruence related to constraining and the constitutive equations for each lamina are rewritten as:

$$\textit{self-equilibrium} \qquad \sum_{i=1}^{n} \sigma_i t_i = 0 \qquad \text{Eq. (34-a)}$$

$$\textit{congruence } \varepsilon_i = e_i + \alpha_i\Delta T = \varepsilon \qquad \text{Eq. (34-b)}$$

$$\textit{constitutive model } \sigma_i = E_i{}^* e_i \qquad \text{Eq. (34-c)}$$

where the subscript *i* represents the rank of the generic layer. Equations (34) represent a set of 3n+1 equations and 3n+1 unknowns ($\sigma_i$, $\varepsilon_i$, $e_i$, $\varepsilon$). This linear system can be therefore solved and the residual stress in the generic layer *i* written as:

$$\sigma_i = E_i^* \left(\alpha_{AVE} - \alpha_i\right)\Delta T \qquad \text{Eq. (35)}$$

where $\alpha_{AVE}$ is expressed as:

$$\alpha_{AVE} = \frac{\sum_1^n E_i^* t_i \alpha_i}{\sum_1^n E_i^* t_i} \qquad \text{Eq. (36)}$$

and represents the average coefficient of thermal expansion of the whole laminate. If the elastic constants ($E_i, \nu_i$), the thermal expansion coefficient ($\alpha_i$) and the thickness ($t_i$) of each layer are known, the stress distribution can be easily estimated by Eqs (35) and (36). Since the stress level in Eq. (35) does not depend on stacking order, the sequence of laminae can be still changed providing the symmetry condition is maintained. Once the stress profile is defined by stress distribution and laminae sequence, the apparent fracture toughness can be estimated by Eqs (21) or (26).

At this point it is useful to analyse in detail the opportunities and limitations related to a proper choice of lamina material. In order to produce a predetermined stress profile it is possible to change some parameters, whereas others are dependent and can not be considered as variables. Since the driving force for residual stresses development is directly related to the difference in thermal expansion, a specific range of material composition should be used to tailor the thermal expansion coefficients. Therefore, elastic modulus and fracture toughness are fixed once the material is chosen, while lamina thickness and position represent free parameters to define the best stress profile and the corresponding T-curve. Nevertheless, some rules of thumb can be stated for lamina material according to the previous discussion and problems associated to co-sintering:

- a high modulus is preferred, either for compressive and tensile layer material since higher stiffness give rise to higher residual stresses;
- a final microstructure with limited porosity is preferred for the same reason;
- a wide and graded range of thermal expansion coefficients are needed; this can be obtained by producing bi- or three-material composites with different relative composition;
- the fracture toughness must be controlled in order to avoid sharp discontinuities in the T-curve; alternatively, it can be adjusted to contribute to an increasing apparent fracture toughness;
- sintering at high temperature and for long time is preferred to obtain dense microstructure, since higher stresses can be sustained without delamination;
- materials with similar shrinkage and sintering rates must be considered to avoid defects due to de-sintering phenomena [27, 32]; if not possible, the problem can be successfully reduced by a proper choice of different powder sizes.

As discussed above, the degrees of freedom for the design of a generic symmetric laminate profile are ($2n-2$). This corresponds to the sum of the free variables related to lamina material nature (n) and to the thickness ($n$), being limited by the boundary condition on the overall thickness and by self-equilibrium of the whole laminate. In such evaluation $n$ represents the numbers of layers produced with different materials, because if different layers are obtained with the same material they have to be computed only once. In addition, the stacking order is not considered and the degrees of freedom are in general higher due to the possible combinations of laminae in sequence. Unfortunately, such great number of variables is strongly limited by the rules required to obtain a monotonic growing T-curve and a range of stable growth for the defects. In the case of edge cracks such conditions can be summarised as follows:

- a thin tensile layer should be placed at the surface to reduce the threshold stress and fix the length of the shortest crack which can propagate in a stable fashion (this aspect will be explained in more detail in the following sections);
- a sequence of compressive layers with a continuously increasing stress amplitude should be considered in order to obtain a graded increasing monotonic T-curve (the amplitude steps must be constant or increasing with depth);
- the thickness of compressive layers must be properly tailored for the same purpose (usually constant or slightly increasing with depth);
- the thickness of the highly stressed layers must be limited to avoid edge cracking;
- beyond the most compressed layer the profile can be modified in order to design the raising side of T-curve in a more accurate manner.

As previously discussed, in the case of internal cracks, either in bending or tension, other conditions have to be satisfied. Since the crack position and growth direction are not known a *priori,* the profile itself has to be repeated periodically within the laminate and to be symmetric in order to produce a corresponding T-curve symmetric with respect to crack growth direction. In addition, internal cracks can grow for a length equal to the extent of tensile layers before crossing the compression region. The overall thickness of tensile layers has to be limited accordingly. In this case better results can be obtained by a proper choice of the layer fracture toughness as well as by the residual stresses development. Nevertheless, it is worthy of note that plies and laminated 2D bodies, like plates, bars and hollow cylinders, are usually designed to support bending loads. Maximum stress and critical defects are therefore usually localised at the surface or in sub-surface regions. In addition, damaging and degradation occurring in service by contact, impact and wear events interest the surface of the bodies. In such cases the laminates described above are "well designed", as the profile is localised just beneath the surface and the material is improved exactly where it is needed.

The approach proposed in this patent to design a laminate structure to control the mechanical behaviour is based on the consideration discussed above. No further general rules can be claimed in addition to what presented in the previous paragraphs, since the parameters involved are numerous, especially when the number of layers, n, is high and all factors controlling the actual trend of a T-curve are strictly correlated one each other. Nevertheless, a trial-and-error method based on an iterative procedure is presented in the following paragraphs as a practical tool to design a laminate with a predetermined mechanical behaviour and specifically a pre-defined bending strength with limited scatter.

Let us assume that a ceramic laminate with the following requirements is desired:

- bending strength = $S_b{}^*$;
- threshold stress = $S_{th}{}^*$ (this corresponds to the minimum stress level at which stable growth can occur);
- stability range = $d^*$ (this represents the depth corresponding to the maximum size of edge cracks propagating in a stable fashion).

The thickness of the whole laminate is $2t^*$. In addition, let us suppose that no limitations exist for material properties selection. The design of such laminate relates to the definition of the parameters describing its structure and specifically the laminae material, the laminae thickness and their position within the multilayer. In order to find out the correct laminate structure satisfying the assigned conditions, a practical procedure is here presented. The method is based on a simple starting trilayer structure defined in Step 1, which is continuously modified and sophisticated step by step in the following stages to verify all the given conditions.

***Step 1***

The first step of this procedure concerns with the definition of a simple symmetric trilayer (Figure 13) obtained by using two materials or compositions in a composite system, presenting a certain difference in the thermal expansion coefficients. The trilayer is obtained by placing two compressed layers with thickness equal to $d^*$ on the surface. Since $2t^*$ is the total thickness, the tensile internal layer has a thickness equal to ($2t^*-2d^*$). Provided the two materials are chosen, elastic constants, fracture toughness and stress-free temperature are fixed. The amount of thermal expansion difference must be selected in such a way that the compressive residual stress in the external layers, as estimated by Eq. (31), is equal than the assigned bending strength, $S_b{}^*$. This condition is expressed as:

$$\sigma_c = \frac{E_c{}^*\Delta\alpha\Delta T}{1+\dfrac{d^* E_c{}^*}{t^*-d^* E_t{}^*}} = -S_b{}^* \qquad\qquad \text{Eq. (37)}$$

where $\Delta\alpha\Delta T$ represents the difference in the free deformation and the subscripts $c$ and $t$ refers to the compressive and tensile layer, respectively. The tensile stress, $\sigma_t$, in the internal layer is simply calculated by self-equilibrium (Eq.(28-a)).

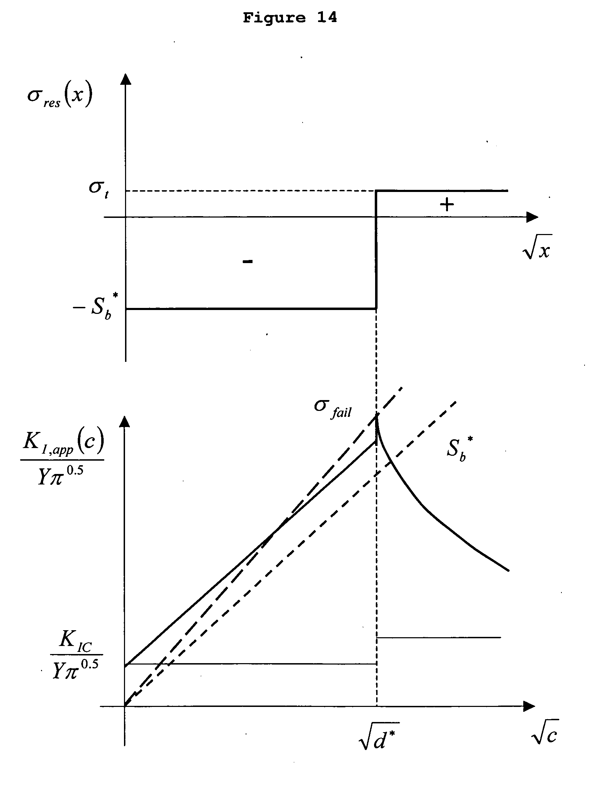

Figure 14 shows the residual stress profile and the apparent fracture toughness as estimated by Eq.(21) for the considered trilayer. As shown in the previous section a square-wave profile with a compressive layer placed at the surface ($x_1 = 0$) presents a T-curve, which is a straight line within the layer, and no stable growth can occur. From Fig. 14 it is evident also that the failure stress at $d^*$, $\sigma_{fail}$, is greater than $S_b{}^*$. It is important to observe also the presence of a discontinuity at $d^*$ due to the finite difference between the fracture toughness of the two layers.

**Step 2**

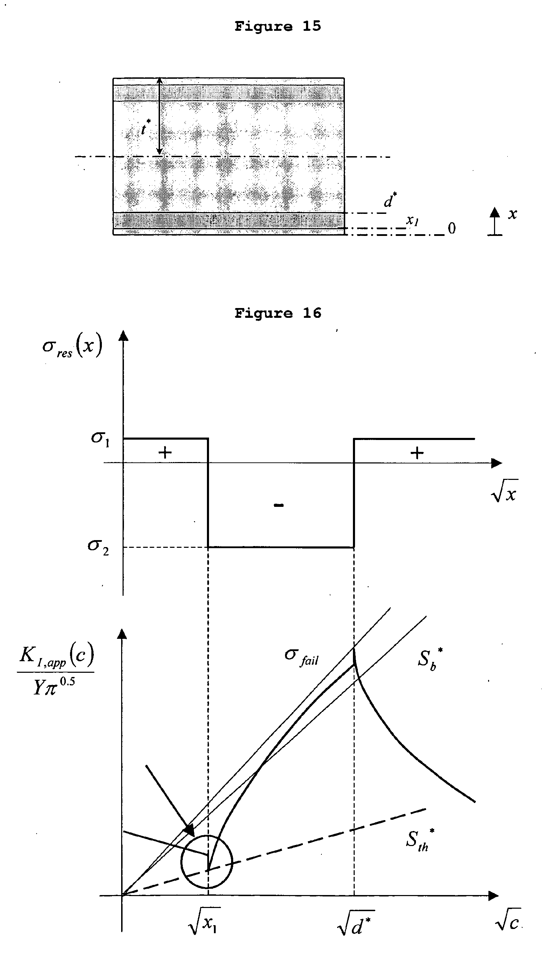

In the second step the trilayer is modified by placing a new layer on the surface subjected to residual tensile stresses (Fig. 15). If $d^*$ is much smaller than $t^*$, this corresponds to a tensile layer with stress of small amplitude. Nevertheless, the actual tensile stress must be computed again by considering the new thickness-to-thickness ratio. In order to obtain the required threshold stress, the thickness of such surface layer, equivalent to the starting depth of the compressive layer, $x_1$, has to be fixed properly. The thickness can be found by equating the applied stress intensity factor corresponding to $S_{th}^*$ and the apparent fracture toughness of the first layer both evaluated at the interior surface, *i.e.* at a depth equal to $x_1$. The two expressions are defined as:

$$\begin{cases} K_{I,th} = YS_{th}^* \left(\pi x_1\right)^{0.5} \\ K_{I,app}^{\ 1} = K_{IC}^{\ 1} - Y\sigma_1 \pi^{0.5} x_1^{\ 0.5} \end{cases} \qquad \text{Eq. (38)}$$

where the upperscript 1 identifies the layer (or, generally, the set of surface layers) in tension.

The solution for $x_1$, corresponding to the intersection point between the two curves defined by Eq. (38), is:

$$x_1 = \left( \frac{K_{IC}^{\ 1}}{Y\pi^{0.5}\left(S_{th} + \sigma_1\right)} \right)^2 \qquad \text{Eq. (39)}$$

Since a discontinuity of T-curve can occur at a depth equal to $x_1$, due to the finite difference between the fracture toughness of the first and the second layer, $x_1$ is more correctly calculated by considering the minimum value between the two fracture toughnesses:

$$x_1 = \left( \frac{\min\left(K_{IC}^{\ 1}, K_{IC}^{\ 2}\right)}{Y\pi^{0.5}\left(S_{th} + \sigma_1\right)} \right)^2 \qquad \text{Eq. (40)}$$

where the superscripts 1 and 2 represent the first and the second layer, respectively. The region corresponding to the threshold condition is pointed out in Fig. 16 in order to understand better why the minimum between the two fracture toughnesses must be used.

According to Eq. (40), it is important to point out also that if the ratio between the minimum fracture toughness of the two layers and the threshold stress is too high, $x_1$ can overcome $d^*$ and no stable growth is possible with the assigned parameters. In this case it is necessary to choose a material with lower toughness or accept a different threshold condition. In this case it is more practical to design a laminate with an assigned value of $x_1 < d^*$ instead of a threshold stress. In this case the same Eq. (40) can be used to calculate the actual threshold stress, $S_{th}$. Another solution could be to increase the amplitude of the surface tensile layer, but it is not usually considered since it has a deleterious effect on the failure stress.

At this point the threshold condition is defined, but in general the maximum stress is not equal to the required strength. The residual stresses and the T-curve presented in Fig. 16 have been calculated according to the new compressive layer thickness, $d^*-x_1$, and to its new starting depth, $x_1$ using Eq. (37) and Eq. (21). The maximum stress should now be changed with respect to the previous value, reduced by the presence of the tensile layer on the surface and partially increased by changing the thickness-to-thickness ratio. The maximum stress can occur at a depth corresponding either to $d^*$ or to the tangent point, as explained in the theoretical discussion for square-wave profiles. At this point there are two possibilities. Regardless the position of the maximum stress, either tangent point or $d^*$, if its amplitude is lower than $S_b^*$, it is necessary to come back to step 1 and choose another couple of materials with a higher difference in thermal expansion coefficient in order to increase the compressive stress. Then the procedure must be repeated up to this point and the condition verified again. Conversely, if the maximum stress is still larger than $S_b^*$, as shown in Fig. 16, it is possible to move to step 3.

### Step 3

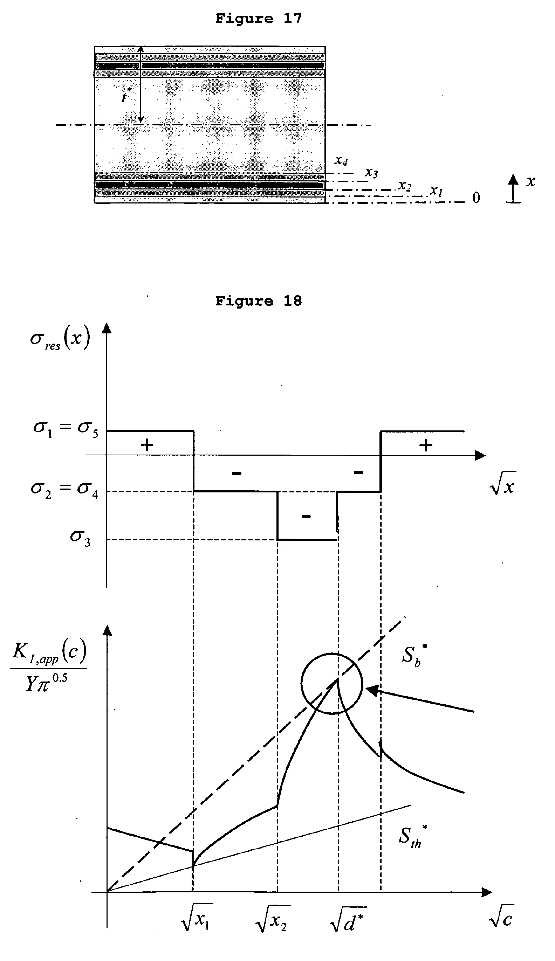

In the third step of the current procedure intermediate layers are placed before and beyond the most stressed layer with stress amplitude and thickness tailored to satisfy the condition of a failure strength in $d^*$ equal to $S_b^*$ according to the rules previously defined. This step can be repeated many times by adding further layers to refine the trend of the T-curve. Every time a layer is added one has to calculate the new stress distribution by Eq. (35) and the modified T-curve by Eq. (21) and verify the failure and threshold conditions requested. Figure 17 shows an example of a 9-layers laminate with two symmetric profiles each obtained with three different materials placed just beneath the surface that satisfy all the conditions required by the design procedure. The corresponding stress profile and T-curve are presented in Fig. 18. The layers placed before $d^*$ have to satisfy the conditions expressed in the previous paragraph for a monotonic growing T-curve. Their effect is similar to that obtained by adding the surface layer in step 2, since both a reduction of the most stressed layer thickness and the following increase of layer compression are produced. In addition, when $x_{tan} < d^*$ for the laminate defined in step 2, the insertion of intermediate layers is also useful to move this point beyond $d^*$ and satisfy the design condition of maximum depth of stably propagating cracks equal to $d^*$.

As previously explained the thickness of the most compressed layer has to be reduced below a minimum value to avoid edge cracking. According to Eq. (21) in the case of intermediate compressive layers placed beyond the most stressed layer, the growing side of T-curve changes only because of the reduction of the compressive stresses according to the decrease of tensile region size. The thickness of these layers can be tailored in an accurate way to obtain exactly the designed bending strength. Usually one intermediate layer is at least required for both side of the profile to avoid delamination. The number of layers is limited only by the minimum thickness that can be obtained. This is related to the used process but a physical limit exists also for the powder grain size. Usually 3-5 µm are considered as the minimum thickness, which can be obtained using micrometric and sub-micrometric powders.

Provided a proper weight function is considered, the procedure presented above can be also used for edge cracks in bending or tensile loading using the model defined by Eq. (26) (finite body) in place of Eq. (21) (infinite body). In the case of bending a more accurate result is obtained if the applied stress intensity factor is calculated by:

$$K_{I,applied} = Y(\alpha)\sigma\sqrt{c} \qquad \text{Eq. (41)}$$

where the geometrical factor $Y$ is a function of $\alpha = c/w$ and is expressed as [26]:

$$Y(\alpha) = \frac{1.12147\pi^{0.5}}{(1-\alpha)^{1.5}}\left[\frac{5}{8} - \frac{5}{12}\alpha + \frac{1}{8}\alpha^2 + 5\alpha^2(1-\alpha)^6 + \frac{3}{8}\exp(-6.1342\alpha/(1-\alpha))\right] \qquad \text{Eq. (42)}$$

One can observe that in the latter case the plot of the applied intensity factor as a function of $c^{0.5}$ is no longer a straight line.

For a generic residual stress profile, if Eq. (41) is used to calculate the applied stress intensity factor and Eq. (26) is used to estimate the apparent fracture toughness, the strength and threshold conditions can be easily obtained. By equating Eq. (41) to Eq. (26) at the depth where the maximum applicable stress (strength, $\sigma_b$) occurs, its intensity can be calculated as:

$$\sigma_b = \frac{\max\left(K_{I,app}{}^i(x_i), K_{I,app}{}^{i+1}(x_i)\right)}{Y(\alpha_i)\sqrt{x_i}} \qquad \text{Eq. (43)}$$

where $K_{I,app}{}^i$ is the apparent fracture toughness for layer $i$, $x_i$ is the starting depth of layer $i$+1, $\alpha_i$ is $x_i$/w, $w$ is the whole laminate thickness and $Y$ is a geometrical factor, said $i$ identifying the layer subjected to maximum residual compression first encountered moving from the surface towards the centre of the laminate; the other symbols have the common meaning.

In an analogous manner, the threshold stress ($\sigma_{th}$) is obtained by:

$$\sigma_{th} = \frac{\min\left(K_{I,app}{}^{k}\left(x_k\right), K_{I,app}{}^{k+1}\left(x_{k+1}\right)\right)}{Y\left(\alpha_k\right)\sqrt{x_k}} \qquad \text{Eq. (44)}$$

where $K_{I,app}{}^k$ is the apparent fracture toughness in layer $k$, $x_k$ is the starting depth of layer $k+1$, $\alpha_k$ is $x_k/w$, $w$ is the whole laminate thickness and $Y$ is a geometrical factor, said $k$ identifying the layer subjected to the lowest residual compression or to maximum residual tension first encountered moving from the surface towards the centre of the laminate; the other symbols have the common meaning.

The calculation of the maximum and threshold stress for the laminates considered in the present work was carried out by using Eqs (43) and (44) and the corresponding applied stress intensity factor by Eq. (41).

**EXAMPLES - CERAMIC LAMINATE PRODUCTION**

Two ceramic multilayers with optimised stress profiles to improve the mechanical behaviour were produced and characterised to demonstrate the validity of the idea proposed in the current patent. To this purpose, composites based on common oxide ceramic materials (alumina, zirconia and mullite) were used. In order to tailor the coefficient of thermal expansion as required to develop a residual stress profile, composites in the alumina/zirconia (AZ) and alumina/mullite (AM) were considered. In this patent the composites are labelled as AXzy where the first two characters represent the composite system (AZ or AM) and the last two correspond to the volume per cent content of the second phase (zirconia or mullite).

The ceramic powders used in the present work are presented in Table 1. $\alpha$-alumina (ALCOA, A-16SG, D50 = 0.4 µm) was considered as the fundamental starting material. High purity and fine mullite (KCM Corp., KM101, $D_{50}$ = 0.77 µm) and yttria (3 mol%) stabilised zirconia (TOSOH, TZ-3YS, $D_{50}$ = 0.4 µm) powders were chosen as second phases to vary the thermal expansion coefficients with respect to pure alumina.

Green laminae were produced by tape casting water-based slurries. Suspensions were prepared by using $NH_4$-PMA (Darvan C®, R. T. Vanderbilt Inc.) as dispersant and acrylic emulsions (B-1235, DURAMAX®) as binder. A lower-Tg acrylic emulsion (B-1000, DURAMAX®) was also added in 1:2 by weight ratio with respect to the binder content as plasticizer to increase the green flexibility and to reduce cracks occurrence in the dried tape. The used organic ingredients are listed in Table 2.

Table 1

| material | code & producer | $D_{50}$ [µm] | BET area [m$^2$/g] | purity [%] |
|---|---|---|---|---|
| $\alpha$-Al$_2$O$_3$ | A-16SG, ALCOA | 0.40 | 8.6 | >99.8 |
| t-ZrO$_2$ | TZ-3YS, TOSOH Corp. | 0.40 | 6.6 | >99.5 |
| 3Al$_2$O$_3$ ·2SiO$_2$ | KM101, KCM Corp. | 0.77 | 8.4 | >99.7 |

The alumina powder dispersion was obtained using a two-step process [24]. In order to enhance the electrostatic interaction between the positive charges on the powder surface and the negative sites on the polymer chains a starting slightly acid water solution (pH = 4) was used [36]. An optimum dispersant content equal to 1.5 wt% with respect to the powder was found by static sedimentation. Such value corresponds to about 0.4 mg/m$^2$ of active matter per unit area, in agreement with values suggested by Greenwood *et al.* [37] for the same material. A ball milling stage using alumina spheres of 6 and 9 mm nominal diameter was performed in polyethylene bottles for 16-24 h to break down all powder aggregates. Suspensions were ultrasonicated for 10 min before ball milling to reduce the starting viscosity. After adding some drops of concentrated $NH_4OH$ to increase pH, suspensions were filtered by a 40 µm polyethylene net and de-aired using a low-vacuum Venturi pump to remove air entrapped during the milling stage.

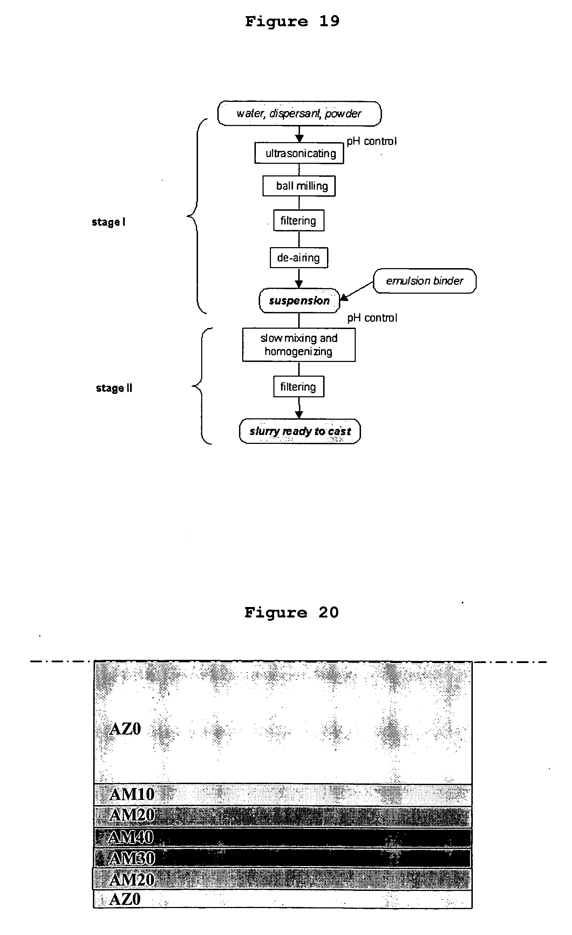

Emulsion acrylic binder and plasticizer were then added to the dispersion and slowly mixed for 30 min to reach a good homogeneity, using great care to avoid the formation of new air bubbles [24]. The final organic content was about 21 vol%. Similar preparation procedure was used for composites slurries, though some modifications of the dispersion process were introduced in order to obtain limited thixotropy and high fluidity. AZ suspensions were prepared by dispersing the zirconia powder in a slightly acid (HCl) water solutions and then by adding the alumina powder. The slurry was ball milled using a high-efficiency mixer (Turbula T2F, W.A. BACHOFEN AG, CH) for duration of 4-8 h. The dispersant was also added in two steps, using an amount of 1.2 wt% with respect to zirconia. In the case of AM composites mullite powder was added after dispersing alumina for 16 h in the same conditions described for pure alumina and ball milled for further 24 h. All suspensions were produced with a powder content of 39 vol%. It is useful to point out that the volume of powders in the first dispersing stage was obviously higher, ranging from 49 to 51 vol%, as the addition of the acrylic emulsions supplies also solvent (water) to the slurry and dilute the system. The complete recipe used to produce the composite AZ40 is presented in Table 3 as an example. Just before casting, slurries were filtered again at 60 µm to ensure the elimination of any bubble or cluster of flocculated polymer. A flow chart of the overall process is shown in Figure 19.

Table 2

| substance | name & producer | function | $T_g$ [°C] | pH | active matter [wt%] |
|---|---|---|---|---|---|
| NH$_4$-PMA | Darvan C®, R. T. Vanderbilt Inc. | dispersant | - | 7.5-9.0 | 25.0 |
| high-Tg acrylic emulsion | B-1235, DURAMAX® | binder | 14 | 8.3 | 46.5 |
| low-Tg acrylic emulsion | B-1000, DURAMAX® | plastifier | -26 | 9.4 | 55.0 |

Tape casting was conducted using a double doctor-blade assembly (DDB-1-6, 6" wide, Richard E. Mistler Inc., USA) at a speed of 1 m/min for a length of about 1000 mm. A composite three-layer film (PET12/A17/LDPE60, BP Europack, Italy) was used as substrate in order to make the removal of the dried green tape easier. For this reason the polyethylene hydrophobic side of the film was placed side-up. The substrate was placed on a rigid float glass sheet in order to ensure a flat surface and properly fixed with adhesive tape to the borders. The relative humidity of the over-standing environment was controlled and set to about 80% during casting and drying to avoid fast evaporation of the solvent and possible cracking of green tapes due to shrinkage stresses. Casting of suspensions was performed using two different blade heights, 250 µm and 100 µm, respectively. Drops of 10 wt% wetting agent water solution (NH$_4$-lauryl sulfate, code 09887, FLUKA CHEMIE AG, CH) were added to the slurries to help the casting tape spreading on the substrate when needed, particularly in the case of thinner tapes.

Table 3

| ingredients | name & producer | function | density [g/cm$^3$] | content [wt%] |
|---|---|---|---|---|
| alumina | A-16SG, ALCOA | ceramic | 3.88[†] | 36.9 |
| zirconia | TZ-3YS, TOSOH Corp. | ceramic | 5.98[†] | 37.9 |
| acrylic emulsion 1 | B-1235, DURAMAX® | binder | 1.05 | 5.9 |
| acrylic emulsion 2 | B-1000, DURAMAX® | plastifier | 1.03 | 3.0 |
| NH$_4$-PMA | Darvan C®, R. T. Vanderbilt Inc. | dispersant | 1.11 | 1.0 |
| water | - | solvent | 1.00 | 15.4 |

[†] Measured by He picnometer.

Green tapes of nominal dimension 60 mm x 45 mm were punched using a hand-cutter, stacked together and thermo-compressed at 70°C using a pressure of 30 MPa for 15 min applied by a universal mechanical testing machine (MTS Systems, mod. 810, USA). Two PET layers 100 µm thick were placed between the laminate and the die to make the removal easier. For mechanical characterisation bars of nominal dimensions 60 mm x 7.5 mm x 1-2 mm were cut after the compression and then relaminated [38] before thermal treatment to avoid any delamination promoted by localised shear stresses developed upon cutting.

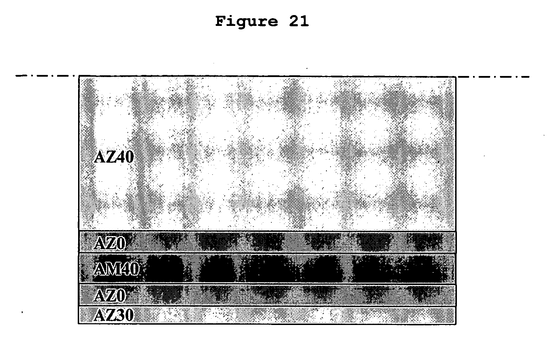

Two multilayered symmetric laminates with a residual stress profile designed to support bending loads were produced. Such laminates, labelled as AM-1 and AMZ-1, present the structures shown in Figures 20 and 21, respectively. AM-1 was produced by using composites in the AM system, whereas AMZ-1 was obtained using either AZ and AM composites in order to increase the thermal expansion range and the corresponding residual stresses accordingly. If a notation similar to the typical one used for composite plies is considered [31], the multilayer structure, i.e. the nature and the sequence of the laminae, can be expressed as:

*AM-1*

AZ0$_{[41]}$ / AM20$_{[44]}$ / AM30$_{[48]}$ / AM40$_{[43]}$ / AM20$_{[44]}$ / AM10$_{[42]}$ / (AZ0$_{[90]}$)$^6$ //

*AMZ-1*

AZ30$_{[36]}$ / AZ0$_{[41]}$ / AM40$_{[93]}$ / AZ0$_{[41]}$ / (AZ40$_{[87]}$)$^6$ //

where the numerical subscript between square brackets represent the actual thickness of each layer and the upperscript represent the time a single layer is repeated. In this notation the symbol *slash* ("/") separates two contiguous layers and, if repeated twice, represents the symmetry plane at the centre of the laminate. As usual, the sequence presented above starts from the external layer. For instance, the laminate AMZ-1 is obtained by stacking in the order one 36 μm AZ30 layer, one 41 μm AZ0 layer, one 93 μm AM40 layer, one 41 μm AZ0 layer and finally six 87 μm AZ40 layers. Such sequence is repeated in a reverse order in order to obtain a symmetric multilayer (Fig. 21).

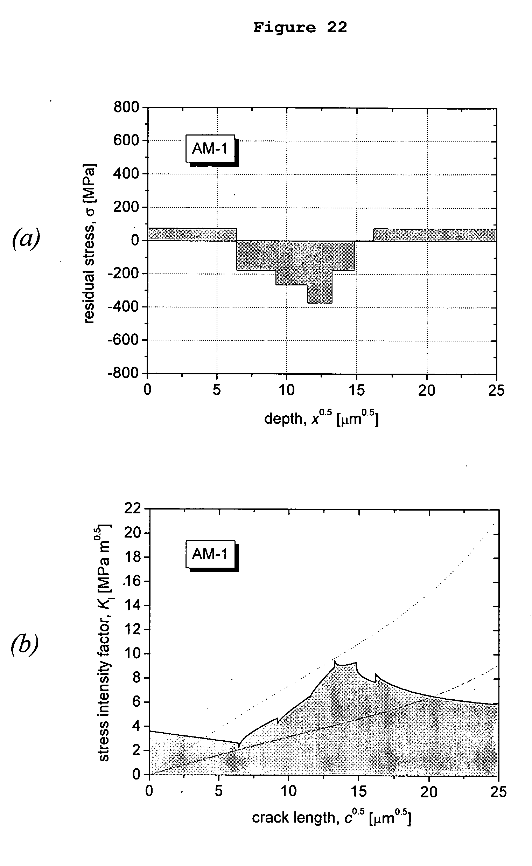

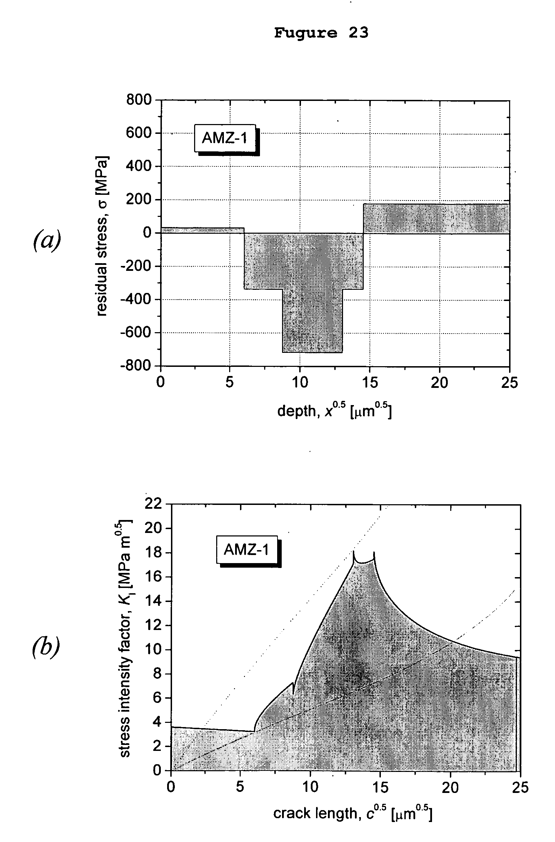

Provided Young modulus, thermal expansion coefficient and fracture toughness for each layer are known, the residual stress distribution and the corresponding apparent fracture toughness curve for each laminate can be estimated. In this study a room temperature of 25°C and a stress-free temperature equal to 1200°C according to previous works [39, 40] were considered. The materials properties required for the calculation and the relative density measured on homogeneous laminates are summarised in Table 4 ($\rho_{rel}$ = relative density; $E$ = Young modulus; $K_{IC}$ = fracture toughness; $\alpha$ = average thermal expansion coefficient (25-1000°C)). For each multilayer the stress distribution were calculated by Eq. (35) and the T-curve estimated according to Eq. (26). Since the porosity of the AM composite layers within the engineered laminates were observed to be smaller compared to the homogeneous samples due to co-sintering effects, Young moduli calculated by the rule-of-mixtures of fully-dense pure phases were considered (reported in parentheses in Table 4). According to literature [41], a Young modulus equal to 229 GPa was considered for pure mullite. The residual stress profiles and the T-curves for AM-1 and AMZ-1 are shown in Figs 22 and 23, respectively. In the same graphs the applied stress intensity factor corresponding to the maximum stress (strength) and the threshold stress in bending calculated by Eq. (41) are also shown (dashed lines). The bending strength and threshold stress estimated by Eqs (43) and (44) are shown in Table 5, together with the depth of the maximum edge cracks propagating in a stable fashion is also shown for each laminate.

Homogeneous laminates made by 14-16 layers of the same composition were also produced as reference samples for testing the mechanical behaviour. To this purpose AZ0 and AZ40 ceramic materials were considered, since they represent the material which the internal region and the surface layer of the engineered multilayers are made of, but for the case of AMZ-1 laminate where AZ30 has been selected for the first layer to have a reduced tensile stress.

All laminates, homogeneous and engineered multilayers, were placed in the furnace heated at a slow rate (1°C/min) up to 600°C to allow the complete burn out of the organic phase and then sintered in air at 1600°C for 2 h. A free cooling phase in the furnace followed.

Table 4

| material | $\rho_{rel}$[%] | $E$ [GPa] | $K_{IC}$ [MPam$^{0.5}$] | $\alpha$[10$^{-6\circ}$C$^{-1}$] |
|---|---|---|---|---|
| AZ0 | 98.9 | 394 ± 14 | 3.6 | 7.75 |
| *AZ composites* | | | | |
| AZ20 | 99.2 | 342 ± 17 | 3.6 | 8.25 |
| AZ30 | 99.3 | 330 ± 5 | 3.6 | 8.37 |
| AZ40 | 99.2 | 303 ± 9 | 4.5 | 8.68 |
| *AM composites* | | | | |
| AM10 | 91.8 | 304 ± 13 (378) $^§$ | 2.8 | 7.63 |
| AM20 | 86.9 | 264 ± 6 (361) $^§$ | 3.1 | 7.30 |
| AM30 | 83.6 | 208 ± 5 (345) $^§$ | 2.6 | 7.12 |
| AM40 | 79.4 | 168 ± 4 (328) $^§$ | 2.4 | 6.88 |

$^§$ Values estimated by the rule-of-mixtures for fully dense composites are reported between parentheses.

Table 5

| laminate | $\sigma_{max}$[MPa] | $\sigma_{th}$ [MPa] | $d^*$ [μm] |
|---|---|---|---|
| AM-1 | 390 | 171 | 176 |
| AMZ-1 | 756 | 276 | 170 |

## EXAMPLES - MECHANICAL BEHAVIOUR

Sintered bars of homogeneous AZ0 (alumina) and AZ40 (40 vol% zirconia) laminates and engineered AM-1 and AMZ-1 laminates with 6 mm x 48 mm nominal dimension were ground using a 40 μm grain size diamond disk to obtain lateral surface perpendicular to the laminae plane. Edges were slightly chamfered to remove macroscopic defects and geometrical irregularities. No further polishing and finishing operations were performed on the sample surfaces or edges to avoid any artificial reduction of flaws severity.

Four-points bending tests were carried out by a universal mechanical testing machine (MTS Systems, mod. 810, USA) using an actuator speed of 5 mm/min, a load cell of 1000 N and nominal inner and outer span of 20 mm and 40 mm, respectively. For each laminate 15-18 samples were considered. A Weibull analysis was performed on bending strength data.

Using the same experimental apparatus and the same test conditions bending strengths on indented samples were also measured in order to investigate the damage tolerance of the engineered laminates. Vickers indentations with loads ranging from 9.8 to 100 N were produced on the sample surface to introduce defects of different sizes. Three indentations were produced in the centre of the perspective tensile surface. Homogeneous samples were also tested in the same conditions for comparison. For each condition five indented samples were considered.

The mechanical behaviour of the two optimised multilayer considered in the present work is presented in the following sections. As previously discussed, the mechanical behaviour of each profile is compared to the behaviour of the corresponding homogeneous ceramic laminates.

### Example 1 - "*AM-1*" **laminate**

The AM-1 laminate possesses an average bending strength equal to $456 \pm 32$ MPa and a coefficient of variation of 6.9% (Table 6). The corresponding homogeneous ceramic material AZ0 shows instead an average strength of $418 \pm 43$ MPa and a COV equal to 10.3%. The spreading of strength data is therefore reduced in the case of the engineered laminate while the average value is only slightly increased. The decrease of strength scatter is also evident by comparing the two Weibull plots shown in Figure 24. The engineered profile AM-1 presents a Weibull modulus equal to 17, undoubtedly higher than 12 as measured for the AZ0 (Table 6). Also the relative strength variability decreases from 0.29 down to 0.19.

The average strength is slightly greater than the design value for the AM-1 laminate shown in Table 5, the latter being indeed in optimum agreement with the minimum of strength data (405 MPa).

The residual scatter of strength data can be related to the presence of cracks with lengths shorter than the minimum crack which can not propagate in a stable manner under the action of stress lower than the design strength and are critical at higher stress levels. Another explanation of such variability regards possible differences in the thickness of single layers and of the overall laminate from one sample to another one. The latter can be probably reduced then by improving the process control during the tape casting and lamination stages.

Table 6

| | $\sigma_b$[MPa] | COV [%] | $\sigma_{min}$[MPa] | $\sigma_{max}$[MPa] | $\Delta\sigma/\sigma$ | *m* |
|---|---|---|---|---|---|---|
| *homogeneous ceramics* | | | | | | |
| AZ0 | $418 \pm 43$ | 10.3 | 346 | 488 | 0.29 | 12 |
| AZ40 | $741 \pm 86$ | 11.6 | 586 | 892 | 0.34 | 10 |
| *engineered multilayer laminates* | | | | | | |
| AM-1 | $456 \pm 32$ | 6.9 | 405 | 501 | 0.19 | 17 |
| AMZ-1 | $692 \pm 25$ | 3.6 | 649 | 738 | 0.12 | 34 |

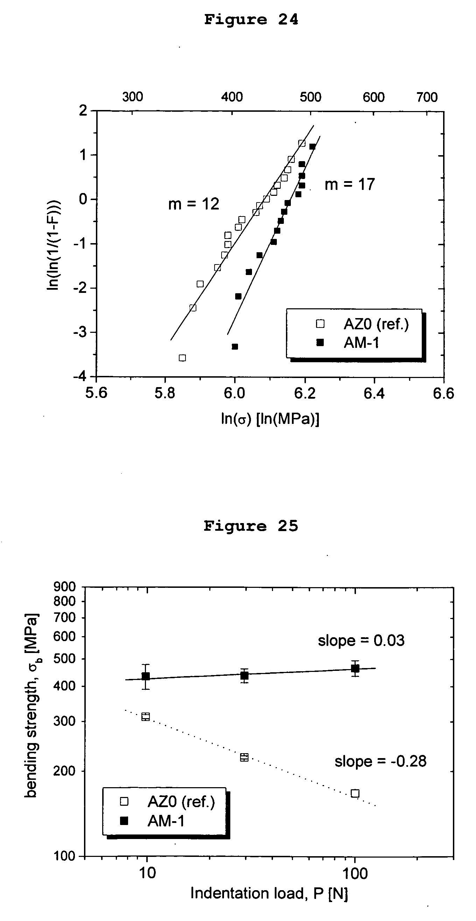

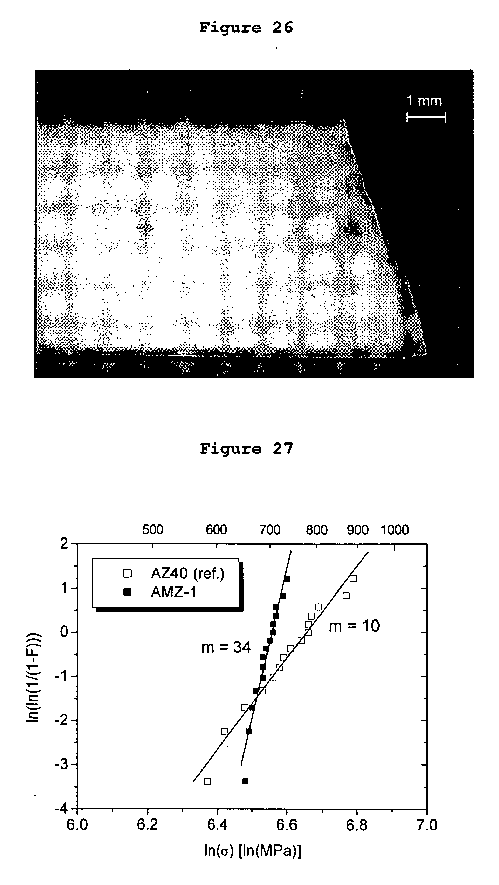

The strength of indented samples as a function of the indentation load is presented in Figure 25 for the same laminates. The bending strength of the AM-1 laminate, ~450 MPa, is not depending on indentation load, whereas strength of the homogeneous AZ0 decreases with load down to 168 MPa for indentation at 100 N. It is important to remind that the theoretical slope of such curves in a logarithmic plot should be -0.33 [2] for a constant $K_{IC}$ material. The zero-slope behaviour observed for the AM-1 laminate points out an ideal damage-tolerant material, since the mechanical behaviour is not influenced at all by the crack size. In addition, such result can be considered as an evidence of the presence of stable growth phenomena [1-3, 10] related to the presence of a "T-curve" behaviour. An experimental evidence can be observed in Fig. 26 where some through-thickness arrested cracks grown in a stable manner in correspondence of indentation cracks are shown for a broken AM-1 indented sample, similarly to what observed for ESP glass [22, 23]. It is worthy of note that some cracks, including the critical defect, grew from pores or edge flaws and not only from indentation sites.

Table 7

| indentation loads | 9.8 N | 29.4 N | 100 N |
|---|---|---|---|
| *homogeneous ceramics* | | | |
| AZ0 | $312 \pm 5$ | $224 \pm 3$ | $168 \pm 5$ |
| AZ40 | $477 \pm 18$ | $331 \pm 8$ | $242 \pm 11$ |
| *engineered multilayered laminates* | | | |
| AM-1 | $434 \pm 44$ | $437 \pm 25$ | $466 \pm 30$ |
| AMZ-1 | $727 \pm 28$ | $719 \pm 37$ | $708 \pm 26$ |

### *Example 2 - "AMZ-1" laminate*

The average bending strength measured on the AMZ-1 samples is equal to $692 \pm 25$ MPa (Table 6). This corresponds to a coefficient of variation of 3.6%, being indeed a very low value for a ceramic material. For sake of comparison, it is worth to remind that the bending strength of the corresponding homogeneous AZ40 laminate is equal to $741 \pm 86$ MPa (COV = 11.6%). The range of strength data is shown in Table 6. If one compares AZ40 with AZM-1, the scatter of strength data decreases from about 300 MPa to less than 100 MPa and the relative strength variability from 0.34 down to 0.12.

Weibull plots for the two laminates are shown in Fig. 27 and the Weibull moduli are presented in Table 6, being equal to ~10 for the AZ40 laminate and ~34 for the AZ-1 laminate. Such difference represents an enormous improvement in the mechanical reliability of the material and it is a sound proof for the stable growth of critical defects. A Weibull modulus equal to 34 is in fact a value typical for tough materials with a strong "T-curve" behaviour, like PSZ composites with a well-designed microstructure.

In addition, if one compares the average strength, 693 MPa, with the bending strength (756 MPa) predicted for this profile (Table 5), it is possible to observe that there is a good agreement, the error being about 12%. The difference can be related to errors in the evaluation of layer thickness or lamina properties, particularly for the thermal expansion coefficient. This parameter is the actual driving force for the development of a residual stress profile and it exerts in fact a direct influence on the amplitude of the layer residual stresses. In addition, the Young modulus of the AM30 layer was overestimated in the design by neglecting the presence of residual porosity. This approximation can induce an overestimation of the compressive residual stress in the AZ30 layer and therefore of the laminate bending strength. The layer thickness also influences bending strength, its effect being twofold: both single residual stress amplitude and depth of internal layers are function of the actual thickness of sintered laminae, the apparent fracture toughness changing accordingly. The above considerations are indeed valid also to explain differences between the design and the actual strength for the laminate presented in the previous example.

For what concerns the AMZ-1 laminate a further reason for the difference between the design and the actual strength can be related also to possible tunnelling phenomena occurring at the maximum depth of stable cracks (Fig. 23-b). The localised sharp increase of the apparent toughness curve occurring at 170 µm due to the difference between the fracture toughness of the two layers can not be effective, in fact, to stop the growing cracks if they possess a finite crack speed and they can overcome such obstacle at lower stress levels.

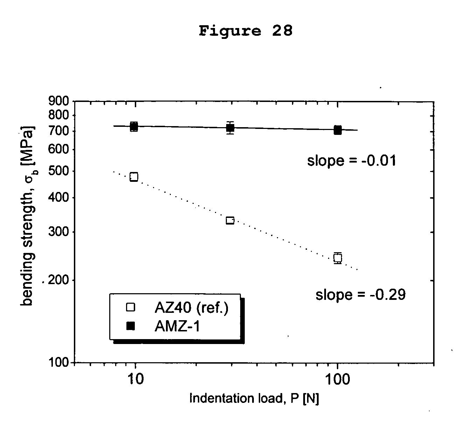

The bending strength obtained on indented samples for the AMZ-1 and AZ40 laminates is shown in Fig. 28. The numerical results are presented in Table 7. The homogeneous AZ40 laminate possesses a strength that decreases with the indentation load, the slope of the fitting line being equal to -0.29. The difference with respect to expected -0.33 value is probably related to limited phase transformation toughening phenomena occurring in the $ZrO_2$ phase [42, 43]. Also in this case the mechanical resistance of the engineered laminate does not depend on indentation load in the considered load range. This corresponds to an ideal damage-tolerant material. In addition the average bending strength on indented samples, ~720 MPa, is in optimum agreement with both the design strength and strengths measured in not indented samples (Table 6).

Of course, without prejudice to the underlying principle of the invention, the details and embodiments may vary, also significantly, with respect to what has been described and shown, by way of examples only, without departing from the scope of the invention, as depicted by the claims that follow.

**REFERENCES**

[1]D. J. Green, *An introduction to the mechanical properties of ceramics,* Cambridge University Press, Cambridge,

UK (1998).

[2]B. R. Lawn, *Fracture of brittle solids,* Second Edition, Cambridge University Press, Cambridge, UK (1993).

[3]J. B. Wachtman, *Mechanical properties of ceramics,* J. Wiley & Sons, NY (1996).

[4]J. B. Davis, A. Kristoffersson, E. Carlstrom and W. J. Clegg, "Fabrication and crack deflection in ceramic laminates with porous interlayers", *J. Am. Ceram. Soc.,* **83** [10] 2369-74 (2000).

[5]W. J. Clegg *et al.*, "A simple way to make tough ceramics", Nature *(London),* **347,** 455-57 (1990).

[6]W. J. Clegg, "Design of ceramic laminates for structural applications", *Mat. Sci. Techriol.*, **14,** 483-95 (1998).

[7]D. Kuo and W. M. Kriven, "Characterization of Yttrium phosphate and a Yttrium phosphate/Yttrium aluminate laminate", *J. Am. Ceram. Soc.,* **78** [11] 3121-3124 (1995).

[8]W. M. Kriven *et al.,* "High-strength, flaw-tolerant, oxide ceramic composite", U.S. Pat. No. 5,948,516, Sept. 7, 1999.

[9]R. E. Mistler *et al.,* "Strengthening alumina substrates by incorporating grain growth inhibitor in surface and promoter in interior", U.S. Pat. No. 3,652,378, March 28, 1972.

[10]M. P. Harmer, H. M. Chan and G. A. Miller, "Unique opportunities for microstructural engineering with duplex and laminar ceramic composites", *J. Am. Ceram. Soc.*, **75** [7] 1715-28 (1992).

[11]C. J. Russo, M. P. Harmer, H. M. Chan and G. A. Miller, "Design of laminated ceramic composite for improved strength and toughness", *J. Am. Ceram. Soc.,* **75** [12] 3396-400 (1992).

[12]R. Latkshminarayanan, D. K. Shetty and R. A. Cutler, "Toughening of layered ceramic composites with residual surface compression", *J. Am. Ceram. Soc.,* **79** [1] 79-87 (1996).

[13]A. J. Blattner, R. Latkshminarayanan and D. K. Shetty, "Toughening of layered ceramic composites with residual surface compression: effects of layer thickness", *Eng. Fract. Mech.,* **68,** 1-7 (2001).

[14]P. Z. Cai, D. J. Green and G. L. Messing, "Mechanical characterization of $Al_2O_3/ZrO_2$ hybrid laminates", *J. Eur. Ceram. Soc.,* **18** [14] 2025-34 (1998).

[15]J. Yoo, K. Cho, W. S. Bae, M. Cima and S. Suresh, "Transformation-toughened ceramic multilayers with compositional gradients", *J. Am. Ceram. Soc.,* **81** [1] 21-32 (1998).

[16]R. A. Cutler, J. D. Bright, A. V. Virkar and D. K. Shetty, "Strength Improvement in Transformation Toughened Alumina by Selective Phase Transformation", *J. Am. Ceram. Soc.,* **70** [10] 714-718 (1987).

[17]B. Hatton and P. S. Nicholson, "Design and fracture of layered $Al_2O_3/TZ3Y$ composites produced by electrophoretic deposition", *J. Am. Ceram. Soc.,* **84** [3] 571-76 (2001).

[18]M. P. Rao, A. J. Sánchez-Herencia, G. E. Beltz, R. M. McMeeking, and F. F. Lange, "Laminar Ceramics That Exhibit a Threshold Strength", *Science,* **286,** 102-5 (1999).

[19]M. G. Pontin, M. P. Rao, A. J. Sánchez-Herencia and F. F. Lange, "Laminar ceramics utilizing the zirconia tetragonal-to-monoclinic phase transformation to obtain a threshold strength", *J. Am. Ceram. Soc.,* **85** [12] 3041-48 (2002).

[20]V. M. Sglavo, L. Larentis and D. J. Green, "Flaw-insensitive ion-exchanged glass: I, theoretical aspects", *J. Am. Ceram. Soc.,* **84** [8] 1827-31 (2001).

[21]V. M. Sglavo and D. J. Green, "Flaw-insensitive ion-exchanged glass: II, production and mechanical performance", *J. Am. Ceram. Soc.,* **84** [8] 1832-38 (2001).

[22]D. J. Green, R. Tandon and V. M. Sglavo, "Crack arrest and multiple cracking in glass using designed residual stress profiles", *Science,* **283,** 1295-97 (1999).

[23]D. J. Green, R. Tandon and V. M. Sglavo, "Strengthening, crack arrest and multiple cracking in brittle materials using residual stresses",U.S. Pat. No. 6,516,634, Feb. 11, 2003.

[24]R. E. Mistler and E. R. Twiname, *Tape Casting - Theory and Practice,* The American Ceramic Society, Westerville, OH, 2000.

[25]H. F. Bueckner, "A novel principle for the computation of stress intensity factors", *Z. Angew. Math. Mech.,* **50,** 529-46 (1970).

[26]D. Munz and T. Fett, *Ceramics: mechanical properties, failure behaviour, materials selection,* Springer Series in Material Science, Vol. **36,** Berlin-Heidelberg (1999).

[27]S. Ho, C. Hillman, F. F. Lange and Z. Suo, "Surface cracking in layers under biaxial, residual compressive stress", *J. Am. Ceram. Soc.,* **78** [9] 2353-59 (1995).

[28]R. J. Moon *et al.,* "R-curve behaviour in alumina/zirconia composites with repeating graded layers", *Eng. Fract. Mech.,* **69,** 1647-65 (2002).

[29]Z-H. Jin and R. C. Batra, "R-curve and strength behaviour of a functionally graded material", *Mater. Sci . Eng. ,* **A242,** 70-76 (1998).

[30]T. J. Chung, A. Neubrand, J. Roedel and T. Fett, "Fracture toughness and R-curve behaviour of Al2O3/Al FGMs", paper in *Ceramic Transaction,* Vol. **114,** 789-96 (2001).

[31]J. C. Halpin, *Primer on composite materials analysis,* II Edition, Technomic Publishing Company, Inc., USA (1992).

[32]P. Z. Cai, D. J. Green, and G. L. Messing, "Constrained densification of alumina/zirconia hybrid laminates, I:

experimental observations of processing defects", *J. Am. Ceram. Soc.,* **80** [8] 1929-39 (1997).

[33]P. Z. Cai, D. J. Green, and G. L. Messing, "Constrained densification of alumina/zirconia hybrid laminates, II: viscoelastic stress computation", *J. Am. Ceram. Soc.,* **80** [8] 1940-48 (1997).

[34]B. Kellett and F. F. Lange, "Stress induced by differential sintering in powder compacts", *J. Am. Ceram. Soc.,* **67** [5] 369-72 (1984).

[35]R. K. Bordia and R. Raj, "Sintering behaviour of ceramic films constrained by a rigid substrate", *J. Am. Ceram. Soc.,* **68** [6] 287-92 (1985).

[36]J. Cesarano III, I. A. Aksay and A. Bleier, "Stability of aqueous ?-$Al_2O_3$ suspensions with poly(methacrylic acid) polyelectrolyte", *J. Am. Ceram. Soc. ,* **71** [4] 250-55 (1988).

[37]R. Greenwood, E. Roncari and C. Galassi, "Preparation of concentrated aqueous alumina suspensions for tape casting", *J. Eur. Ceram. Soc. ,* **17,** 1393-1401 (1997).

[38]K. P. Plucknett *et al.,* "Processing of tape-cast laminates prepared from fine alumina/zirconia powders", *J. Am. Ceram. Soc.,* **77** [8] 2145-53 (1994).

[39]V. Sergo *et al.*, "Residual stresses in alumina/ceria stabilized zirconia composites", *J. Am. Ceram. Soc.,* **78** [8] 2213-14 (1995).

[40]M. P. Rao, J. Roedel and F. F. Lange, "Residual stress induced R-curves in laminar ceramics that exhibit a threshold strength", *J. Am. Ceram. Soc.,* **84** [11] 2722-24 (2001).

[41]H. Ledbetter *et al.,* "Elastic properties of mullite", *J. Am. Ceram. Soc.*, **81** [4] 1025-28 (1998).

[42]F. F. Lange, "Transformation toughening. Part 4 Fabrication, fracture toughness and strength of $Al_2O_3$-$ZrO_2$ composites", *J. Mater. Sci.,* **17,** 247-254 (1982).

[43]R. H. J. Hannink, P. M. Kelly, and B. C. Muddle, "Transformation toughening in zirconia-containing ceramics", *J. Am. Ceram. Soc.,* **83** [3] 461-87 (2000).

## Claims

1. Ceramic multilayered laminate, **characterized in that** said laminate presents at least one of the following characteristics: a Weibull modulus higher than 12, a variability coefficient of the bending strength lower than 10%.

2. Ceramic multilayered laminate according to claim 1, **characterized in that** said laminate presents a Weibull modulus higher than 15.

3. Ceramic multilayered laminate according to claim 2, **characterized in that** said laminate presents a Weibull modulus higher than 30.

4. Ceramic multilayered laminate according to any one of the preceding claims, **characterized in that** said laminate presents a variability coefficient of the bending strength lower than 7%.

5. Ceramic multilayered laminate according to claim 4, **characterized in that** said laminate presents a variability coefficient of the bending strength lower than 4%.

6. Ceramic multilayered laminate according to any one of the preceding claims, **characterized in that** said laminate presents a bending strength after Vickers indentation at 100 N load greater than 400 MPa.

7. Ceramic multilayered laminate according to claim 6, **characterized in that** said laminate presents a bending strength after Vickers indentation at 100 N load greater than 700 MPa.

8. Ceramic multilayered laminate according to any one of the preceding claims, **characterized in that** said laminate presents a stable growth of surface cracks.

9. Ceramic multilayered laminate according to claim 8, **characterized in that** said cracks stable growth acts as a failure warning.

10. Ceramic multilayered laminate according to any one of the preceding claims, **characterized in that** said laminate presents a number *n* of single laminae, wherein said number *n* is at least equal to 3.

11. Ceramic multilayered laminate according to claim 10, **characterized in that** said *n* single laminae present each one a different composition.

**12.** Ceramic multilayered laminate according to claim 10 or 11, **characterized in that** said laminate presents a planar symmetric structure, wherein the stacking order of said single laminae is symmetric with respect to the longitudinal plane of said laminate.

**13.** Ceramic multilayered laminate according to any one of the claims 10 to 12, **characterized in that** said ceramic multilayered laminate presents at least one tensile layer placed at each external surface of said ceramic multilayered laminate.

**14.** Ceramic multilayered laminate according to any one of the claims 10 to 13, **characterized in that** said ceramic multilayered laminate presents a stacked series of compressive layers, wherein said stacked compressive layers present increasing stress from the external surface to the core up to a certain depth, said depth being greater than the largest surface flaw size.

**15.** Ceramic multilayered laminate according to any one of the claims 10 to 14, **characterized in that** said single lamina is constituted by a material selected from the group consisting of: an oxide ceramic material a non oxide-ceramic material, an inorganic glass, a glass-ceramic material, intermetallics, metals (up to 50 vol% in the single lamina) or mixtures thereof.

**16.** Ceramic multilayered laminate according claim 15, **characterized in that** said oxide ceramic material is selected from the group consisting of alumina, zirconia, mullite, silica, titania or mixtures thereof.

**17.** Ceramic multilayered laminate according to claim 15, **characterized in that** said non oxide-ceramic material is selected from the group consisting of carbides, nitrides, borides or mixtures thereof.

**18.** Ceramic multilayered laminate according to any one of the preceding claims, **characterized in that** said laminate presents a maximum applicable stress (strength, $\sigma_b$) governed by the following algorithmic relation:

$$\sigma_b = \frac{\max\left(K_{I,app}{}^i(x_i), K_{I,app}{}^{i+1}(x_i)\right)}{Y(\alpha_i)\sqrt{x_i}} \qquad \text{Eq. (43)}$$

wherein $K_{I,app}{}^i$ is the apparent fracture toughness for layer $i$, $x_i$ is the starting depth of layer $i+1$, $\alpha_i$ is $x_i/w$, $w$ is the whole laminate thickness and $Y$ is a geometrical factor, said i identifying the layer subjected to maximum residual compression first encountered moving from the surface towards the centre of the laminate.

**19.** Ceramic multilayered laminate according to any one of the preceding claims, **characterized in that** said laminate presents a threshold stress ($\sigma_{th}$) governed by the following algorithmic relation:

$$\sigma_{th} = \frac{\min\left(K_{I,app}{}^k(x_k), K_{I,app}{}^{k+1}(x_{k+1})\right)}{Y(\alpha_k)\sqrt{x_k}} \qquad \text{Eq. (44)}$$

wherein $K_{I,app}{}^k$ is the apparent fracture toughness for layers k, $x_k$ is the starting depth of layer $k+1$, $\alpha_k$ is $x_k/w$, $w$ is the whole laminate thickness and $Y$ is a geometrical factor, said k identifying the layer subjected to the lowest residual compression or to maximum residual tension first encountered moving from the surface towards the centre of the laminate.

**20.** Ceramic multilayered laminate according to claim 18 or 19, **characterized in that** said apparent fracture toughness for layer $i$ ($K_{I,app}{}^i$) is governed by the following algorithmic relation:

$$K_{I,app}{}^{i} = K_{IC}{}^{i} - c\sum_{j=1}^{i}\left[\Delta\sigma_j\left(S_0{}^{1} - S_0{}^{\beta_j}\right)\right] \quad x_{i-1} < x < x_i \qquad \text{Eq. (26)}$$

wherein $K_{IC}{}^{i}$ is the fracture toughness of layer $i$, $c$ is the crack length, $\Delta\sigma_j$ is difference between the residual stress in layer j with respect to stress in the layer j-1, $\beta$ is $c/x$, $S_0{}^{1}$ is the integral in $d\beta$ between 0 and 1 for $h(\alpha,\beta)$ and $S_0{}^{\beta 1}$ is the integral in $d\beta$ between 0 and $\beta j$.

21. Ceramic multilayered laminate according to claim 20, **characterized in that** said residual stress $\sigma_i$ in the layer $i$ is governed by the following algorithmic relation:

$$\sigma_i = E_i^{*}\left(\alpha_{AVE} - \alpha_i\right)\Delta T \qquad \text{Eq. (35)}$$

wherein $E_i^{*}$ is the elastic modulus in biaxial stress state equal to $E_i/(1-v)$ ($E_i$ being the Young modulus), $\alpha_i$ is the coefficient of thermal expansion of layer $i$, $\alpha_{AVE}$ is the average coefficient of thermal expansion of the multilayered laminate defined by Eq. 36 and $\Delta T$ is the difference between the stress-free temperature $T_{sf}$ and room temperature.

22. Ceramic multilayered laminate according to claim 21, **characterized in that** said average coefficient of thermal expansion of the whole ceramic multilayered laminate ($\alpha_{AVE}$) is governed by the following algorithmic relation:

$$\alpha_{AVE} = \frac{\sum_1^n E_i^{*} t_i \alpha_i}{\sum_1^n E_i^{*} t_i} \qquad \text{Eq. (36)}$$

wherein $E_i^{*}$ is the elastic modulus in biaxial stress state equal to $E_i/(1-v)$ ($E_i$ being the Young modulus), $\alpha_i$ is the coefficient of thermal expansion of generic layer $i$ and $t_i$ the thickness of the layer $i$.

23. Method for manufacturing ceramic multilayered laminate according to any one of the claims 1 to 22, **characterized in that** said method comprises a phase of co-sintering a number n of single laminae and a phase of cooling the co-sintered ceramic multilayered laminate.

24. Method according to claim 23, **characterized in that** said co-sintering temperature is at least of 500°C.

25. Method according to claim 23 or 24, **characterized in that** said number n of single laminae is at least equal to 3.

26. Method according to any one of the claims 23 to 25, **characterized in that** said single lamina is constituted a material selected from the from group consisting of: an oxide ceramic material, a non oxide-ceramics, an inorganic glass, a glass-ceramic material, intermetallics, metals (up to 50 vol% in the single lamina) or mixtures thereof.

27. Method according to claim 26, **characterized in that** said oxide ceramic material is selected from the group consisting of alumina, zirconia, mullite, silica, titania or mixtures thereof.

28. Method according to claim 26, **characterized in that** said non oxide-ceramics selected from the group consisting of carbides, nitrides, borides or mixtures thereof.

29. Method for manufacturing a ceramic multilayered laminate, **characterized in that** said method comprises a phase of determining the maximum applicable stress (strength, $\sigma_b$) to said ceramic multilayered laminate, wherein said maximum applicable stress ($\sigma_b$) is governed by the following algorithmic relation:

$$\sigma_b = \frac{\max\left(K_{I,app}{}^i(x_i), K_{I,app}{}^{i+1}(x_i)\right)}{Y(\alpha_i)\sqrt{x_i}} \qquad \text{Eq. (43)}$$

wherein $K_{I,app}{}^i$ is the apparent fracture toughness for layer $i$, $x_i$ is the starting depth of layer $i+1$, $\alpha_i$ is $x_i/w$, $w$ is the whole laminate thickness and $Y$ is a geometrical factor, said i being the layer subjected to maximum residual compression first encountered moving from the surface towards the centre of the laminate, whereby said ceramic multilayered laminate presents at least one of the following characteristics: a Weibull modulus higher than 12, preferably higher than 15, a variability coefficient of the bending strength lower than 10%, preferably lower than 7%.

30. Method for manufacturing a ceramic multilayered laminate, **characterized in that** said method comprises a phase of determining the threshold stress ($\sigma_{th}$) of said ceramic multilayered laminate, wherein said threshold stress ($\sigma_{th}$) is governed by the following algorithmic relation:

$$\sigma_{th} = \frac{\min\left(K_{I,app}{}^k(x_k), K_{I,app}{}^{k+1}(x_{k+1})\right)}{Y(\alpha_k)\sqrt{x_k}} \qquad \text{Eq. (44)}$$

wherein $K_{I,app}{}^k$ is the apparent fracture toughness for layers k, $x_k$ is the starting depth of layer $k+1$, $\alpha_k$ is $x_k/w$, $w$ is the whole laminate thickness and $Y$ is a geometrical factor, said k being the layer subjected to the lowest residual compression or to maximum residual tension first encountered moving from the surface towards the centre of the laminate, whereby said ceramic multilayered laminate presents at least one of the following characteristics: a Weibull modulus higher than 12, preferably higher than 15, a variability coefficient of the bending strength lower than 10%, preferably lower than 7%.

31. Method according to claim 29 or 30, **characterized in that** said apparent fracture toughness for layer $i$ ($K_{I,app}{}^i$) is governed by the following algorithmic relation:

$$K_{I,app}{}^i = K_{IC}{}^i + c\sum_{j=1}^{i}\left[\Delta\sigma_j\left(S_0{}^1 - S_0{}^{\beta_j}\right)\right] \quad x_{i-1} < x < x_i \qquad \text{Eq. (26)}$$

wherein $K_{IC}{}^i$ is the fracture toughness of layer $i$, $c$ is the crack length, $\Delta\sigma_j$ is difference between the residual stress in layer j with respect to stress in the layer j-1, $\beta$ is $c/x$, $S_0{}^1$ is the integral in $d\beta$ between 0 and 1 for $h(\alpha,\beta)$ and $S_0{}^{\beta 1}$ is the integral in $d\beta$ between 0 and $\beta j$.

32. Method according to claim 31, **characterized in that** said residual stress $\sigma_i$ in the layer $i$ is governed by the following algorithmic relation:

$$\sigma_i = E_i^*\left(\alpha_{AVE} - \alpha_i\right)\Delta T \qquad \text{Eq. (35)}$$

wherein $E_i^*$ is the elastic modulus in biaxial stress state equal to $E_i/(1-v)$ ($E_i$ being the Young modulus), $\alpha_i$ is the coefficient of thermal expansion of layer $i$, $\alpha_{AVE}$ is the average coefficient of thermal expansion of the multilayered laminate defined by Eq. 36 and $\Delta T$ is the difference between the stress-free temperature $T_{sf}$ and room temperature.

33. Method according to claim 32, **characterized in that** said average coefficient of thermal expansion of the whole ceramic multilayered laminate ($\alpha_{AVE}$) is governed by the following algorithmic relation:

$$\alpha_{AVE} = \frac{\sum_1^n E_i^* t_i \alpha_i}{\sum_1^n E_i^* t_i} \qquad \text{Eq. (36)}$$

wherein wherein $E_i^*$ is the elastic modulus in biaxial stress state equal to $E_i/(1-v)$ ($E_i$ being the Young modulus), $\alpha_i$ is the coefficient of thermal expansion of generic layer $i$ and $t_i$ the thickness of the layer $i$.

34. Method for manufacturing a ceramic multilayered laminate comprising the operations of i) determining the design strength of the materials and the largest flaw size in said material, ii) stacking ceramic layers with different thermal expansion coefficient in a manner so that residual stresses are generated after sintering; said residual stress generating an apparent fracture toughness curve that increases from a first value to a second value within a depth in said material, said first value being smaller than said second value, said depth being greater than said largest flaw size; whereby said second value of said apparent fracture toughness is selected to promote stable growth of surface flaws in said ceramic multilayered laminate when subjected to a sufficient applied stress and causing failure of said ceramic multilayered laminate when the applied stress exceeds said second stress value.

35. Method for manufacturing a ceramic multilayered laminate comprising the operations of i) determining a critical flaw size and defining a design strength in said ceramics, ii) stacking ceramic layers with different thermal expansion coefficient in a manner so that residual stresses are generated after sintering; said residual stress generating an apparent fracture toughness curve that increases from a first value to a second value within a depth in said material, said first value being smaller than said second value, said depth being greater than said largest flaw size, so that a plurality of visible cracks are formed prior to failure in said ceramic multilayered laminate when said ceramic multilayered laminate is subjected to a stress greater than said minimum stress level and lower than said ultimate stress level, by calculating an apparent fracture toughness curve from said residual stress profile and selecting said applied stress level to be in a region of inflection along said apparent fracture toughness curve; whereby said ceramic multilayered laminate displays visible cracking prior to failure when subjected to an applied stress level greater than said predetermined minimum stress level (threshold stress) and less than said ultimate stress level for failure.

36. Method for manufacturing a ceramic multilayered laminate, comprising the operations of i) determining an apparent fracture toughness of the material over a range of crack sizes, wherein a change in the apparent fracture toughness with a change in the crack size is greater than a change in a stress intensity factor acting on the crack with the change in crack size, ii) stacking ceramic layers with different thermal expansion coefficient in a manner so that residual stresses are generated after sintering; said residual stress generating an apparent fracture toughness over the range of crack sizes; wherein the residual stress is tensile at the surface of the material and becomes compressive within a depth in the material; whereby said ceramic multilayered laminate displays multiple cracking and crack arrest without failure when subjected to an applied stress that is less than an ultimate tensile strength of said ceramic multilayered laminate.

Figure 1

Figure 2

**Figure 3**

**Figure 4**

Figure 5

(a)

(b)

**Figure 6**

(a)

(b)

**Figure 7**

(a)

(b)

**Figure 8**

**Figure 9**

**Figure 10**

Figure 11

(a)

$$\frac{K_{I,app}(c)}{Y\pi^{0.5}}$$

$\sigma_{max}$

$\sigma_{th}$

$\sqrt{c}$

(b)

$$\frac{K_{IC}}{Y\pi^{0.5}}$$

$\sqrt{x}$

**Figure 12**

*Initial condition – STRESS FREE*

*Free deformation (zero adhesion) – STRESS FREE*

*Constrained deformation (perfect adhesion) – RESIDUAL STRESSES*

**Figure 13**

Figure 14

**Figure 15**

**Figure 16**

## Figure 17

## Figure 18

**Figure 19**

**Figure 20**

Figure 21

Figure 22

(a)

(b)

Fugure 23

(a)

(b)

Figure 24

Figure 25

Figure 26

1 mm

Figure 27

Figure 28

**European Patent Office**

## PARTIAL EUROPEAN SEARCH REPORT

**Application Number**

which under Rule 45 of the European Patent Convention EP 03 02 5894
shall be considered, for the purposes of subsequent
proceedings, as the European search report

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/113554 A1 (NISHIKAWA YOSHIKATSU ET AL) 19 June 2003 (2003-06-19) <br> * abstract * <br> * tables 1-4 * <br> * claims 1-11 * | 1-28 | B32B18/00 <br> C04B35/10 <br> C04B35/185 <br> C04B35/488 |
| A | | 29-33 | |
| D,X | US 5 948 516 A (KRIVEN WALTRAUD M ET AL) 7 September 1999 (1999-09-07) <br> * abstract * <br> * column 3, line 22 - line 34 * <br> * column 11, line 16 - line 60 * <br> * claims 1-3,6 * | 1-28 | |
| A | | 29-33 | |

**TECHNICAL FIELDS SEARCHED (Int.Cl.7)**

B32B
C04B
B28B
H01L

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 14 September 2004 | Burtan, M-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent Office**

**INCOMPLETE SEARCH
SHEET C**

Application Number

EP 03 02 5894

---

Claim(s) searched completely:
23-28

Claim(s) searched incompletely:
1-22

Claim(s) not searched:
29-36

Reason for the limitation of the search:

Present claims 1-22 relate to a product defined by reference to a desirable characteristic or property, namely the Weibul modulus and/or the variability coefficient of the bending strength.
The claims cover all products having this characteristic or property, whereas the application provides support within the meaning of Article 84 EPC and disclosure within the meaning of Article 83 EPC for only a very limited number of such products. In the present case, the claims so lack support, and the application so lacks disclosure, that a meaningful search over the whole of the claimed scope is impossible. Independent of the above reasoning, the claims also lack clarity (Article 84 EPC). An attempt is made to define the product by reference to a result to be achieved. Again, this lack of clarity in the present case is such as to render a meaningful search over the whole of the claimed scope impossible. Consequently, the search has been carried out for those parts of the claims which appear to be clear, supported and disclosed, namely those parts relating to the products obtainable by the method as described in claims 23-28 and the examples in the description (page 41, line 28 - page 49, line 1).

European Patent
Office

Application Number

EP 03 02 5894

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-22 (partially), 23-30 (fully), 31-33 (partially)

☐ None of the further search fees have been paid within the fixed time limit. The present European search report has been drawn up for those parts of the European patent application which relate to the invention first mentioned in the claims, namely claims:

**European Patent Office**    **LACK OF UNITY OF INVENTION SHEET B**    **Application Number**

EP 03 02 5894

The Search Division considers that the present European patent application does not comply with the requirements of unity of invention and relates to several inventions or groups of inventions, namely:

1. claims: 1-22 (partially), 23-28

   Method for manufacturing a ceramic multilayered laminate characterized in that said method comprises a phase of co-sintering a number n of single laminae and a phase of cooling the co-sintered ceramic multilayered laminate (claims 23-28).
   Ceramic multilayered laminate insofar as obtained by the method of any of the claims 23-28. (claims 1-22)

   ---

2. claims: 1-22 (partially), 29, 31-33 (partially)

   Method for manufacturing a ceramic multilayered laminate, characterized in that said method comprises a phase of determining the maximum applicable stress to said ceramic laminate (claim 29 fully, claims 31-33 partially, insofar as dependent to claim 29).
   Ceramic multilayered laminate insofar as obtained by the method of any of the claims 29, 31-33. (claims 1-22)

   ---

3. claims: 1-22 (partially), 30, 31-33 (partially)

   Method of manufacturing a ceramic multilayered laminate, characterized in that said method comprises a phase of determining the threshold stress of said laminate (claim 30 fully, claims 31-33 partially, insofar as dependent to claim 30).
   Ceramic multilayered laminate insofar as obtained by the method of any of the claims 30-33 (claims 1-22).

   ---

4. claims: 1-22 (partially), 34

   Method for manufacturing a ceramic multilayered laminate comprising the operations of i) determining the design strength of the materials and the largest flaw size in said material, ii) stacking ceramic layers with different thermal expansion coefficient in a manner so that residual stresses are generated after sintering (claim 34).
   Ceramic multilayered laminate insofar as obtained by the method of claim 34 (claims 1-22).

   ---

5. claims: 1-22 (partially), 35

**European Patent Office**

**LACK OF UNITY OF INVENTION
SHEET B**

Application Number

EP 03 02 5894

The Search Division considers that the present European patent application does not comply with the requirements of unity of invention and relates to several inventions or groups of inventions, namely:

Method for manufacturing a ceramic multilayered laminate comprising the operations of i) determining a critical flaw size and defining a design strength in said ceramics, ii) stacking ceramic layers with different thermal expansion coefficient in a manner so that residual stresses are generated after sintering (claim 35).
Ceramic multilayered laminate insofar as obtained by the method of claim 35 (claims 1-22).

---

6. claims: 1-22 (partially), 36

Method for manufacturing a ceramic multilayered laminate, comprising the operations of i) determining an apparent fracture toughness of the material over a range of crack sizes, wherein a change in the apparent fracture toughness with a change in the crack size is greater than a change in a stress intensity factor acting on the crack with the change in crack size, ii) stacking ceramic layers with different thermal expansion coefficient in a manner so that residual stresses are generated after sintering (claim 36).
Ceramic multilayered laminate insofar as obtained by the method of claim 36 (claims 1-22).

---

**ANNEX TO THE EUROPEAN SEARCH REPORT
ON EUROPEAN PATENT APPLICATION NO.**

EP 03 02 5894

This annex lists the patent family members relating to the patent documents cited in the above–mentioned European search report.
The members are as contained in the European Patent Office EDP file on
The European Patent Office is in no way liable for these particulars which are merely given for the purpose of information.

14-09-2004

| Patent document cited in search report | | Publication date | Patent family member(s) | | Publication date |
|---|---|---|---|---|---|
| US 2003113554 | A1 | 19-06-2003 | JP<br>DE | 2003055034 A<br>10238053 A1 | 26-02-2003<br>06-03-2003 |
| US 5948516 | A | 07-09-1999 | NONE | | |

EPO FORM P0459

For more details about this annex : see Official Journal of the European Patent Office, No. 12/82